# EUROPÄISCHE PATENTSCHRIFT

(11) **EP 4 617 522 B1**
(45) Veröffentlichungstag und Bekanntmachung des Hinweises auf die Patenterteilung: **10.06.2026**
(21) Anmeldenummer: 24163036.7
(22) Anmeldetag: 12.03.2024
(51) Int. Cl.: F16D 43/206

(54) **ABSCHALTKUPPLUNG**
DISCONNECT COUPLING
EMBRAYAGE DE COUPURE

(43) Veröffentlichungstag der Anmeldung: 17.09.2025
(73) Patentinhaber: C. & E. Fein GmbH, 73529 Schwäbisch-Gmünd-Bargau (DE)
(72) Erfinder: YOGESHWARAN, Vishnuvardhan, 73560 Böbingen an der Rems (DE); SCHIMKO, Frank, 74354 Besigheim (DE)
(74) Vertreter: Wallinger Ricker Schlotter Tostmann

(56) Entgegenhaltungen:
- EP-B1- 3 361 114
- WO-A1-2023/023244
- DE-A1- 102020 130 665
- US-A1- 2007 180 959
- US-A1- 2021 154 807
- US-B2- 7 234 536
- US-B2- 7 334 647

## Beschreibung

Die Erfindung betrifft eine drehmomentabhängig auslösbare Abschaltkupplung für eine elektrische Handwerkzeugmaschine, insbesondere für einen Schrauber, zur selektiven Übertragung eines Drehmoments von einer Antriebswelle auf eine zu der Antriebswelle koaxiale Abtriebswelle sowie ein Verfahren zum Betrieb einer elektrischen Handwerkzeugmaschine mit einer solchen Abschaltkupplung.

Die Erfindung wird nachfolgend am Beispiel eines Schraubers dargestellt. Insbesondere ist die Erfindung für den Einsatz in einem Industrieschrauber vorgesehen. Dies ist jedoch nicht einschränkend zu verstehen. Die Erfindung kann auch bei anderen elektrischen Handwerkzeugmaschinen, wie etwa Bohrmaschinen oder Schleifmaschinen, eingesetzt werden.

Die vorliegend betrachteten Schrauber oder auch Akkuschrauber werden insbesondere für industrielle Serienverschraubungen, beispielsweise bei der Produktion von Automobilen, verwendet.

Für Schraubverbindungen, insbesondere solche im industriellen Bereich, ist oftmals ein Nenn-Anzugsdrehmoment vorgegeben, mit welchem die Schraubverbindung angezogen werden soll. Während des Herstellens der Schraubverbindung steigt das Anzugsdrehmoment an. An den Schrauber besteht daher die Anforderung, beim Erreichen des Nenn-Anzugsdrehmoments die Drehmomentübertragung zu unterbrechen und insbesondere den Motor des Schraubers abzuschalten.

Zu diesem Zweck weisen derartige Schrauber in ihrem Antriebsstrang eine Abschaltkupplung auf, welche sich beim Erreichen eines einstellbaren Drehmoments öffnet.

Eine solche Abschaltkupplung ist beispielsweise aus der EP 3 361 114 B1 bekannt. Dabei weist die Abschaltkupplung ein erstes Kupplungselement und ein zweites Kupplungselement auf, welche zur Übertragung eines Drehmoments zusammenwirken, wobei mindestens eines der beiden Kupplungselemente gegenüber dem anderen Kupplungselement beweglich ist und durch ein Federelement vorgespannt ist. Die beiden Kupplungselemente sind über mindestens eine Kugel formschlüssig gekoppelt, so dass ein Drehmoment zwischen den beiden Kupplungselementen übertragen werden kann. Mindestens ein Kupplungselement weist außerdem als Formschlusselement je ein Nockenelement pro Kugel auf. Erreicht das Drehmoment einen gewissen Wert, so beginnt die Kugel durch die auf sie wirkende Umfangskraft, an dem Nockenelement mit einer Steigung, die kleiner als 90 Grad ist (bezogen auf die Richtung der Umfangskraft) hochzulaufen. Auf diese Weise löst die Kupplung beim Überschreiten dieses Drehmoments aus oder "öffnet" sich.

Eine weitere Abschaltkupplung ist aus der DE 10 2020 130 665 A1 bekannt. Die beiden Kupplungselemente sind hierbei ein Nockenring und ein Schaltring, welche ebenfalls axial gegeneinander vorgespannt und durch Kugeln formschlüssig gekoppelt sind. Der Nockenring weist eine in Umfangsrichtung geschlossene Nockenbahn mit mindestens einer Schaltnocke auf, an der die Kugel bei geschlossener Abschaltkupplung anliegt. Bei Überschreitung eines Auslösemoments wird die Kugel in eine in dem Nockenring ausgebildete Freilaufbahn eingeleitet, sodass kein Drehmoment mehr zwischen den beiden Kupplungselementen übertragbar ist.

Der vorliegenden Erfindung liegt die Aufgabe zugrunde, eine Abschaltkupplung für eine elektrische Handwerkzeugmaschine weiter zu verbessern und ein Verfahren zum Betrieb einer elektrischen Handwerkzeugmaschine mit einer derartigen Abschaltkupplung anzugeben.

Diese Aufgabe wird durch eine Abschaltkupplung gemäß Anspruch 1, eine elektrische Handwerkzeugmaschine mit einer derartigen Abschaltkupplung gemäß Anspruch 15 sowie durch entsprechende Verfahren zu deren Betrieb gelöst. Vorteilhafte Ausgestaltungen der Erfindung sind in den Unteransprüchen enthalten.

Eine erfindungsgemäße drehmomentabhängig auslösbare Abschaltkupplung für eine elektrische Handwerkzeugmaschine, insbesondere für einen Schrauber, zur selektiven Übertragung eines Drehmoments von einer Antriebswelle auf eine zu der Antriebswelle koaxiale Abtriebswelle weist auf:
- einen Nockenring, welcher mit der Antriebswelle oder mit der Abtriebswelle drehfest verbindbar ist, und
- einen axial nicht verschiebbaren ersten Führungsring, welcher mit der anderen der Antriebswelle und der Abtriebswelle drehfest verbindbar ist.

Die Abschaltkupplung ist von einer ersten Schaltstellung, in der der Nockenring mit dem ersten Führungsring in einer ersten Drehrichtung, insbesondere in axialer Richtung von der Antriebswelle zur Abtriebswelle hin gesehen im Uhrzeigersinn, drehmomentübertragend verbunden ist, in eine zweite Schaltstellung, in der der Nockenring gegenüber dem ersten Führungsring frei drehbar ist, bringbar.

Weiterhin weist die erfindungsgemäße Abschaltkupplung auf:
- wenigstens ein Schaltelement, insbesondere eine Kugel, welches von dem ersten Führungsring in Umfangsrichtung und/oder in radialer Richtung geführt ist, und
- einen zweiten Führungsring, wobei der Nockenring und der zweite Führungsring axial gegeneinander vorgespannt sind und das wenigstens eine Schaltelement axial zwischen sich aufnehmen.

Der Nockenring ist derart ausgebildet, dass, wenn sich die Abschaltkupplung in der ersten Schaltstellung befindet, das wenigstens eine Schaltelement bei Überschreitung eines in der ersten Drehrichtung wirkenden ersten Auslösedrehmoments relativ zu dem Nockenring gegen die Wirkung der Vorspannung in axialer Richtung ausgelenkt wird, wodurch die Abschaltkupplung in die zweite Schaltstellung gebracht wird.

Hierdurch wird eine sich zuverlässig bei Überschreitung des ersten Auslösedrehmoments öffnende, robuste und einfach aufgebaute Abschaltkupplung bereitgestellt, wodurch die Aufgabe, die Abschaltkupplung zu verbessern, gelöst wird.

Die Aufnahme des wenigstens einen Schaltelements zwischen dem Nockenring und dem zweiten Führungsring, welche axial gegeneinander vorgespannt sind, bewirkt zusammen mit der Führung des wenigstens einen Schaltelements in Umfangsrichtung und/oder in radialer Richtung durch den ersten Führungsring, dass die Bewegung des wenigstens einen Schaltelements stets in allen Richtungen kontrolliert wird und die Abschaltkupplung somit keine undefinierten Zustände annehmen kann.

Da die auf das wenigstens eine Schaltelement wirkende axiale Vorspannung nur zwischen dem Nockenring und dem zweiten Führungsring erfolgt und der erste Führungsring daran nicht beteiligt ist, ist es möglich, den ersten Führungsring erfindungsgemäß axial nicht verschiebbar anzuordnen. Dadurch lässt sich die drehfeste Verbindung zwischen dem ersten Führungsring und der Antriebs- bzw.

Abtriebswelle einfacher realisieren, insbesondere durch eine starre oder sogar einstückige Verbindung, als wenn der erste Führungsring axial verschiebbar sein müsste.

Entsprechend ist es bevorzugt, dass auch der Nockenring axial nicht verschiebbar ist, da sich dann auch die drehfeste Verbindung zwischen dem Nockenring und der Antriebs- bzw. Abtriebswelle einfacher realisieren lässt, als wenn der Nockenring axial verschiebbar sein müsste. Damit einhergehend ist es bevorzugt, dass stattdessen der zweite Führungsring axial verschiebbar ist, um auf diese Weise die axiale Vorspannung zwischen dem Nockenring und dem zweiten Führungsring sowie die Auslenkbarkeit des wenigstens einen Schaltelements entgegen dieser Vorspannung zu realisieren. Der zweite Führungsring ist dagegen nicht an der Drehmomentübertragung von der Antriebswelle auf die Abtriebswelle beteiligt und benötigt daher auch keine drehfeste Verbindung zu einer dieser Wellen.

Insbesondere wird durch die erfindungsgemäße Abschaltkupplung der folgende, erste Anwendungsfall unterstützt: Beim Herstellen einer Schraubverbindung, insbesondere bestehend aus einer Schraube mit einem Außengewinde und einem Gegenstück, bevorzugt einem Befestigungsabschnitt, insbesondere einer Öffnung, mit einem Innengewinde, im Rechtslauf der Handwerkzeugmaschine soll sich die Abschaltkupplung öffnen, sobald das Nenn-Anzugsdrehmoment der Schraubverbindung erreicht ist. In diesem Fall sollte das erste Auslösedrehmoment also diesem Nenn-Anzugsdrehmoment entsprechen. Der erste Anwendungsfall besteht somit darin, die Schraubverbindung vor einer zu großen Verspannung und damit einer möglichen Beschädigung der Schraube oder des Gegenstücks zu schützen.

In einer bevorzugten Ausführung der Erfindung weist der Nockenring auf:
- wenigstens eine Vertiefung, insbesondere eine Kugeltasche, in der das wenigstens eine Schaltelement in der ersten Schaltstellung aufgenommen ist, wobei durch die wenigstens eine Vertiefung eine erste Schaltnocke gebildet ist, an der das wenigstens eine Schaltelement in der ersten Schaltstellung anliegt,
- eine in Umfangsrichtung geschlossene Freilaufbahn, auf der das wenigstens eine Schaltelement in der zweiten Schaltstellung umlaufen kann, und
- wenigstens eine Ausleitbahn, welche die wenigstens eine Vertiefung und die Freilaufbahn verbindet und auf welcher sich das wenigstens eine Schaltelement von der wenigstens einen Vertiefung zu der Freilaufbahn und umgekehrt bewegen kann.

Die Freilaufbahn und die wenigstens eine Ausleitbahn sind vorzugsweise durch jeweilige langgestreckte Aussparungen in einer Oberfläche des Nockenrings, welche vorzugsweise in einer zur axialen Richtung senkrechten Ebene verläuft, gebildet. Die Freilaufbahn und die wenigstens eine Ausleitbahn bilden somit vorzugsweise Rillen in der Oberfläche des Nockenrings, welche weiter vorzugsweise einen kreissegmentförmigen Querschnitt aufweisen.

Dabei ist das wenigstens eine Schaltelement bei Überschreitung des ersten Auslösedrehmoments in axialer Richtung auslenkbar und die Abschaltkupplung in die zweite Schaltstellung bringbar, indem sich das wenigstens eine Schaltelement aus der wenigstens einen Vertiefung über die wenigstens eine Ausleitbahn in die Freilaufbahn bewegt.

Auf diese Weise können die erste und die zweite Schaltstellung der Abschaltkupplung durch die Lage des wenigstens einen Schaltelements in der wenigstens einen Vertiefung bzw. in der Freilaufbahn einfach und zuverlässig definiert werden. Durch die in Umfangsrichtung geschlossene Freilaufbahn kann das wenigstens eine Schaltelement außerdem dort beliebig lange umlaufen, wodurch die Abschaltkupplung beliebig lange in der zweiten Schaltstellung und somit im geöffneten Zustand verbleiben kann.

In einer bevorzugten Variante der zuletzt beschriebenen Ausführung der Erfindung steigt das axiale Niveau der wenigstens einen Ausleitbahn von der Vertiefung in Richtung der Freilaufbahn an und ist stets tiefer als oder gleich hoch wie das axiale Niveau der Freilaufbahn.

Ein axiales Niveau ist dabei definiert als eine Tiefe in der Oberfläche des Nockenrings, d. h. ein tieferes axiales Niveau bedeutet eine tiefere Aussparung in der Oberfläche des Nockenrings.

Damit der Übergang eines Schaltelements von der Freilaufbahn in die Ausleitbahn sicher erfolgen kann, weisen die Freilaufbahn und die wenigstens eine Ausleitbahn in axialer Richtung bevorzugt unterschiedliche Niveaus auf. Während die Freilaufbahn bevorzugt ein konstantes Niveau aufweist, steigt die wenigstens eine Ausleitbahn ausgehend von der ersten Schaltnocke an der wenigstens einen Vertiefung im Nockenring bevorzugt stetig an, bis sie an der Abzweigung oder Mündung beider Bahnen das Niveau der Freilaufbahn erreicht. An dieser Stelle weisen die Freilaufbahn und die wenigstens eine Ausleitbahn bevorzugt die gleichen Radien bzw. Formen auf und gehen mit einem "glatten" Verlauf ineinander über.

Aufgrund der verschiedenen axialen Niveaus der Freilaufbahn und der wenigstens einen Ausleitbahn und deren Anordnung entsteht bevorzugt ein stufenartiger Übergang zwischen diesen beiden Bahnen, der quer zu deren Laufrichtung angeordnet ist. Dieser stufenartige Übergang bildet bevorzugt eine Führung. Dadurch wird gewährleistet, dass ein Wechsel eines Schaltelements von der wenigstens einen Ausleitbahn in die Freilaufbahn und umgekehrt ausschließlich an der Mündung zwischen der Freilaufbahn und der wenigstens einen Ausleitbahn erfolgen kann.

Die genannte Führung am Übergang zwischen der wenigstens einen Ausleitbahn und der Freilaufbahn kann insbesondere dann vorteilhaft sein, wenn die Abschaltkupplung mehr als ein Schaltelement und für jedes Schaltelement eine Ausleitbahn aufweist. Durch die Führung kann sichergestellt werden, dass alle verwendeten Schaltelemente zum gleichen Zeitpunkt an der jeweiligen Mündung zwischen der Freilaufbahn und jeweils einer der Ausleitbahnen zwischen diesen wechseln. Dadurch kann verhindert werden, dass bei einem Drehrichtungswechsel ein erstes Schaltelement in eine der Ausleitbahnen wechselt, während sich ein zweites Schaltelement noch in der Freilaufbahn befindet.

In einer weiteren bevorzugten Ausführung der Erfindung ist durch die axiale Auslenkung des wenigstens einen Schaltelements infolge des ersten Auslösedrehmoments eine axiale Verschiebung des Nockenrings und/oder des zweiten Führungsrings bewirkbar, und die Abschaltkupplung weist weiterhin einen Sensor auf, der dazu eingerichtet ist, diese Verschiebung zu detektieren.

Die Detektion der axialen Verschiebung des Nockenrings und/oder des zweiten Führungsrings kann in vorteilhafter Weise dafür genutzt werden, um die zweite Schaltstellung und damit den geöffneten Zustand der Abschaltkupplung zu erkennen. Im Betrieb einer Handwerkzeugmaschine mit einer erfindungsgemäßen Abschaltkupplung kann dann durch die Motorsteuerung für den Antriebsmotor der Handwerkzeugmaschine eine Änderung der Drehrichtung des Motors ausgelöst werden, wodurch das wenigstens eine Schaltelement wieder von der Freilaufbahn über die wenigstens eine Ausleitbahn in die wenigstens eine Vertiefung zurückkehrt, wodurch die Abschaltkupplung in die erste Schaltstellung zurückkehrt und sich wieder schließt.

In einer weiteren bevorzugten Ausführung der Erfindung ist der erste Führungsring als Käfigring mit wenigstens einer Durchgangsöffnung ausgebildet, und das wenigstens eine Schaltelement ist in der wenigstens einen Durchgangsöffnung aufgenommen.

Durch die Ausbildung des ersten Führungsrings als Käfigring ist der Aufnahmeraum für das wenigstens eine Schaltelement insbesondere in radialer Richtung gegenüber der Umgebung geschlossen, sodass das wenigstens eine Schaltelement auch unter der Einwirkung der Fliehkraft bei der Rotation der Abschaltkupplung den ersten Führungsring nicht verlassen und dadurch möglicherweise innerhalb des Gehäuses der Handwerkzeugmaschine "verlorengehen" kann.

In einer Variante der zuletzt beschriebenen Ausführung der Erfindung weist die wenigstens eine Durchgangsöffnung eine langgestreckte, insbesondere langgestreckte, gerade Form auf, deren Erstreckungsrichtung gegenüber einer radialen Richtung geneigt ist. Alternativ kann die Durchgangsöffnung eine von einer geraden Form abweichende, beispielsweise leicht gekrümmte Form aufweisen.

Eine Neigung der Erstreckungsrichtung der wenigstens einen Durchgangsöffnung in dem ersten Führungsring gegenüber einer radialen Richtung ist vorteilhaft für die radiale Bewegung des wenigstens einen Schaltelements beim Übergang der Abschaltkupplung von der ersten in die zweite Schaltstellung, bei der sich das wenigstens eine Schaltelement radial nach innen bewegt. Durch die gegenüber einer radialen Richtung geneigte Erstreckungsrichtung der wenigstens einen Durchgangsöffnung kann das wenigstens eine Schaltelement bei dieser Bewegung an der Innenwand der wenigstens einen Durchgangsöffnung wie an einer schrägen Wand "hinabgleiten", wodurch sich die Reibung vermindert und eine Selbsthemmung zwischen dem wenigstens einen Schaltelement und dem ersten Führungsring verhindert wird.

In einer weiteren Variante der zuletzt beschriebenen Ausführung der Erfindung ist der erste Führungsring axial zwischen dem Nockenring und dem zweiten Führungsring angeordnet, und das wenigstens eine Schaltelement steht axial auf beiden Seiten über den Rand der wenigstens einen Durchgangsöffnung hervor.

Durch die Anordnung des ersten Führungsrings axial zwischen dem Nockenring und dem zweiten Führungsring wird eine Zwangsführung des wenigstens einen Schaltelements in alle Richtungen erreicht, nämlich axial zwischen dem Nockenring und dem zweiten Führungsring sowie radial und/oder in Umfangsrichtung durch den ersten Führungsring.

Durch den axialen Überstand des wenigstens einen Schaltelements über die Seitenflächen des ersten Führungsrings bzw. über den Rand der wenigstens einen Durchgangsöffnung in dem ersten Führungsring wird weiterhin gewährleistet, dass der zweite Führungsring stets in axialem Kontakt zu dem wenigstens einen Schaltelement stehen kann, ohne mit dem Rand der wenigstens einen Durchgangsöffnung zu kollidieren. Dabei liegt der Rand der wenigstens einen Durchgangsöffnung vorzugsweise in einer Ebene mit einer Seitenfläche des ersten Führungsrings. Gleichermaßen ist gewährleistet, dass der Nockenring stets in axialem Kontakt zu dem wenigstens einen Schaltelement stehen kann, ohne mit dem Rand der wenigstens einen Durchgangsöffnung in dem ersten Führungsring zu kollidieren. Der axiale Überstand des wenigstens einen Schaltelements auf den beiden Seite des ersten Führungsrings ist vorzugsweise so bemessen, dass das Vorgenannte bei jeder axialen Position des wenigstens einen Schaltelements in den Aussparungen im Nockenring bzw. in der wenigstens einen Durchgangsöffnung in dem ersten Führungsring gilt.

In einer Variante der Ausführung der Erfindung mit wenigstens einer Vertiefung in dem Nockenring ist die wenigstens eine Vertiefung -innerhalb des Nockenrings angeordnet. Dies bedeutet, dass die Vertiefung, vorzugsweise in Form einer Ausnehmung bzw. einer Kugeltasche, beabstandet zu dem Außenumfang des Nockenrings angeordnet ist. Vorzugsweise ist der Außenumfang des Nockenrings in dem Bereich der Vertiefung höher als die Vertiefung, so dass die Vertiefung radial nach außen hin geschlossen ist.

Dies kann, ähnlich wie bei der Ausbildung des ersten Führungsrings als Käfigring, den Vorteil haben, dass das wenigstens eine Schaltelement auch unter der Einwirkung der Fliehkraft bei der Rotation der Abschaltkupplung den Nockenring nicht verlassen und dadurch möglicherweise innerhalb des Gehäuses der Handwerkzeugmaschine "verlorengehen" kann.

In einer Variante der zuletzt beschriebenen Variante der Erfindung weist die wenigstens eine Vertiefung eine langgestreckte Form auf, geht an einem ersten Ende in die wenigstens eine Ausleitbahn über und weist ein tieferes axiales Niveau als die wenigstens eine Ausleitbahn auf. Der Übergang der Vertiefung in die Ausleitbahn bildet die erste Schaltnocke.

Diese Ausgestaltung der wenigstens einen Vertiefung stellt eine einfache Möglichkeit dar, die erste Schaltnocke in den Aussparungen im Nockenring auszubilden und dabei dem wenigstens einen Schaltelement nach dem Überwinden der ersten Schaltnocke einen unmittelbaren Übergang in die wenigstens eine Ausleitbahn zu ermöglichen. Durch das tiefere axiale Niveau der wenigstens einen Vertiefung als das axiale Niveau der wenigstens einen Ausleitbahn wird gleichzeitig die gewünschte axiale Auslenkung des wenigstens einen Schaltelements beim Überwinden der ersten Schaltnocke bewirkt.

In einer Variante der zuletzt beschriebenen Variante der Erfindung ist der Übergang am ersten Ende der wenigstens einen Vertiefung von der wenigstens einen Vertiefung in die wenigstens eine Ausleitbahn, in der Erstreckungsrichtung der wenigstens einen Vertiefung und der wenigstens einen Ausleitbahn gesehen, im Wesentlichen glatt.

Dies kann eine gleichmäßige und - abgesehen von dem Ruck, welcher durch das Überwinden der ersten Schaltnocke verursacht wird - ruckfreie Bewegung des wenigstens eine Schaltelements auf seinem Weg aus der wenigstens einen Vertiefung in die wenigstens eine Ausleitbahn bewirken.

In einer Variante der Ausführung der Erfindung mit wenigstens einer Vertiefung, einer Freilaufbahn und wenigstens einer Ausleitbahn im Nockenring weist die Freilaufbahn ein konstantes axiales Niveau auf.

Hierdurch kann sich eine besonders gleichmäßige Bewegung des wenigstens einen Schaltelements in dem zweiten Schaltzustand ergeben. Dies führt zu einem verschleißarmen, vibrationsarmen und/oder geräuscharmen Schaltvorgang. Zusätzlich wird durch das konstante axiale Niveau der Freilaufbahn jede weitere axiale Auslenkung des wenigstens einen Schaltelements und eine damit verbundene axiale Verschiebung des Nockenrings und/oder des zweiten Führungsrings vermieden, sodass sich der Übergang von der ersten zur zweiten Schaltstellung zuverlässig detektieren lässt, wodurch die Aufgabe, die Abschaltkupplung zu verbessern, ebenfalls gelöst wird.

In einer weiteren Variante der Ausführung der Erfindung mit wenigstens einer Vertiefung, einer Freilaufbahn und wenigstens einer Ausleitbahn im Nockenring weist die wenigstens eine Ausleitbahn wenigstens teilweise die Form einer logarithmischen Spirale auf.

Dies kann ebenfalls eine gleichmäßige und ruckfreie Bewegung des wenigstens einen Schaltelements auf der wenigstens einen Ausleitbahn nach radial innen bewirken.

In einer weiteren bevorzugten Ausführung der Erfindung ist die Abschaltkupplung von einer dritten Schaltstellung, in der der Nockenring mit dem ersten Führungsring in einer zweiten, der ersten Drehrichtung entgegengesetzten Drehrichtung, insbesondere in axialer Richtung von der Antriebswelle zur Abtriebswelle hin gesehen gegen den Uhrzeigersinn, drehmomentübertragend verbunden ist, in eine vierte Schaltstellung, in der der Nockenring gegenüber dem ersten Führungsring frei drehbar ist, bringbar.

Dabei ist der Nockenring derart ausgebildet, dass, wenn sich die Abschaltkupplung in der dritten Schaltstellung befindet, das wenigstens eine Schaltelement bei Überschreitung eines in der zweiten Drehrichtung wirkenden zweiten Auslösedrehmoments relativ zu dem Nockenring gegen die Wirkung der Vorspannung in axialer Richtung ausgelenkt wird, wodurch die Abschaltkupplung in die vierte Schaltstellung gebracht wird.

Hierdurch wird eine sich zuverlässig bei Überschreitung des zweiten Auslösedrehmoments öffnende, robuste und einfach aufgebaute Abschaltkupplung bereitgestellt.

Durch diese Ausführung der erfindungsgemäßen Abschaltkupplung wird insbesondere der folgende, zweite Anwendungsfall unterstützt: Beim Lösen einer Schraubverbindung im Linkslauf der Handwerkzeugmaschine kann es bei einer festsitzenden Schraubverbindung erforderlich sein, dass das zum Lösen benötigte Drehmoment größer als das maximale Motordrehmoment ist. Ein Betrieb der Handwerkzeugmaschine mit einem derart großen Drehmoment könnte zu einer Beschädigung des Motors führen. Daher soll sich die Abschaltkupplung öffnen, noch bevor das maximale Motordrehmoment erreicht ist. In diesem Fall sollte das zweite Auslösedrehmoment daher etwas kleiner als das maximale Motordrehmoment sein. Der zweite Anwendungsfall besteht somit darin, den Motor der Handwerkzeugmaschine vor einer Überlastung und Beschädigung zu schützen.

In einer bevorzugten Variante der zuletzt beschriebenen Ausführung der Erfindung, in der weiterhin wenigstens eine Vertiefung in dem Nockenring vorgesehen ist, ist das wenigstens eine Schaltelement in der dritten Schaltstellung in der wenigstens einen Vertiefung aufgenommen, wobei durch die wenigstens eine Vertiefung eine zweite Schaltnocke gebildet ist, an der das wenigstens eine Schaltelement in der dritten Schaltstellung anliegt.

Der Nockenring weist weiterhin eine in Umfangsrichtung weitgehend geschlossene und nur durch die wenigstens eine Vertiefung unterbrochene Nockenbahn auf, auf der das wenigstens eine Schaltelement in der vierten Schaltstellung wenigstens abschnittsweise umlaufen kann.

Außerdem ist das wenigstens eine Schaltelement bei Überschreitung des zweiten Auslösedrehmoments in axialer Richtung auslenkbar und die Abschaltkupplung in die vierte Schaltstellung bringbar, indem sich das wenigstens eine Schaltelement aus der wenigstens einen Vertiefung in die Nockenbahn bewegt.

Mit dieser Ausgestaltung des Nockenrings können im Wesentlichen die gleichen Vorteile erzielt werden wie oben für die erste und die zweite Schaltstellung beschrieben, nämlich dass auf diese Weise die dritte und die vierte Schaltstellung der Abschaltkupplung durch die Lage des wenigstens einen Schaltelements in der wenigstens einen Vertiefung bzw. in der Nockenbahn einfach und zuverlässig definiert werden können. Im Gegensatz zur zweiten Schaltstellung bleibt die vierte Schaltstellung jedoch nur so lange erhalten, bis das wenigstens eine Schaltelement aus der Nockenbahn in die nächste Vertiefung fällt. Die Dauer dieser Bewegung kann jedoch ausreichend sein, um die vierte Schaltstellung zu detektieren und darauf zu reagieren.

In einer bevorzugten Variante der zuletzt beschriebenen Ausführung der Erfindung weist die wenigstens eine Vertiefung eine langgestreckte Form auf, geht an einem zweiten Ende in die Nockenbahn über und weist ein tieferes axiales Niveau als die Nockenbahn auf, wobei durch diesen Übergang die zweite Schaltnocke gebildet ist.

Hierdurch können sich die entsprechenden Vorteile ergeben wie in der oben beschriebenen Variante, in der die wenigstens eine Vertiefung an einem ersten Ende in die wenigstens eine Ausleitbahn übergeht und ein tieferes axiales Niveau als die wenigstens eine Ausleitbahn aufweist, wobei durch diesen Übergang eine erste Schaltnocke gebildet ist.

Bevorzugt liegt das zweite Ende der wenigstens einen Vertiefung bezüglich deren langgestreckter Form einem solchen ersten Ende gegenüber.

In einer weiteren bevorzugten Variante der zuletzt beschriebenen Ausführung der Erfindung ist durch die axiale Auslenkung des wenigstens einen Schaltelements infolge des zweiten Auslösedrehmoments eine axiale Verschiebung des Nockenrings und/oder des zweiten Führungsrings bewirkbar, und die Abschaltkupplung weist weiterhin einen Sensor auf, der dazu eingerichtet ist, diese Verschiebung zu detektieren.

Dies kann - ähnlich wie oben für die zweite Schaltstellung - genutzt werden, um die vierte Schaltstellung und damit den geöffneten Zustand der Abschaltkupplung zu detektieren. Allerdings ist im Anschluss an diese Detektion keine Umkehrung der Drehrichtung des Motors erforderlich, da in diesem Fall das wenigstens eine Schaltelement in der Nockenbahn verbleiben und auch bei einem Weiterbetrieb des Motors in derselben Drehrichtung in eine Vertiefung zurückkehren kann, wobei diese Vertiefung dann die in Umfangsrichtung folgende Vertiefung ist, und dadurch auch die Abschaltkupplung in die dritte Schaltstellung zurückkehren kann.

Selbstverständlich kann der Sensor zur Detektion der vierten Schaltstellung mit dem Sensor zur Detektion der zweiten Schaltstellung identisch sein, da in beiden Fällen eine axiale Verschiebung des Nockenrings und/oder des zweiten Führungsrings detektiert wird.

In einer bevorzugten Variante derjenigen Varianten der Erfindung, in denen die erste und die zweite Schaltnocke durch jeweils einen Übergang an einem ersten bzw. an einem zweiten Ende der wenigstens einen Vertiefung gebildet sind, ist die Innenwandung der wenigstens einen Vertiefung an deren zweitem Ende steiler als die Innenwandung der wenigstens einen Vertiefung an deren erstem Ende, sodass das zweite Auslösedrehmoment größer ist als das erste Auslösedrehmoment.

Der beschriebene Zusammenhang, dass das Auslösedrehmoment umso größer ist, je steiler der Übergang an dem jeweiligen Ende der wenigstens einen Vertiefung ist, ergibt sich dabei unmittelbar aus dem oben beschriebenen Zusammenwirken des wenigstens eine Schaltelements mit der jeweiligen Innenwandung der wenigstens einen Vertiefung (der "Rampe") im Sinne eines Keilgetriebes. Dass das zweite Auslösedrehmoment größer ist als das erste Auslösedrehmoment, kann vorteilhaft sein, da das maximale Motordrehmoment, nach welchem das zweite Auslösedrehmoment bemessen sein soll, im Allgemeinen größer ist als das Nenn-Anzugsdrehmoment einer Verschraubung, nach welchem das erste Auslösedrehmoment bemessen sein soll.

In einer weiteren bevorzugten Variante der zuletzt beschriebenen Ausführung der Erfindung weist die Nockenbahn, außer im Bereich der wenigstens einen Vertiefung, ein konstantes axiales Niveau auf.

Hierdurch können sich die gleichen Vorteile ergeben wie bei der entsprechenden Ausführung mit einem konstanten axialen Niveau der Freilaufbahn, nämlich dass sich in diesem Fall der Übergang von der dritten zur vierten Schaltstellung zuverlässig detektieren lässt.

In einer weiteren bevorzugten Ausführung der Erfindung weist die Abschaltkupplung einen Freilauf auf, welcher geöffnet und geschlossen werden kann, welcher dazu eingerichtet ist, sich an einem Gehäuse der elektrischen Handwerkzeugmaschine abzustützen, und welcher im geschlossenen (aktivierten) Zustand eine Drehung der Abtriebswelle in der ersten Drehrichtung zulässt und eine Drehung der Abtriebswelle in der zweiten Drehrichtung blockiert und im geöffneten (deaktivierten) Zustand die Drehbarkeit der Abtriebswelle nicht beeinflusst.

Ein Freilauf mit diesen Funktionen ist vorteilhaft, wenn in der zweiten Schaltstellung die Drehrichtung des Motors von der ersten in die zweite Drehrichtung umgekehrt wird, um das wenigstens eine Schaltelement von der Freilaufbahn über die wenigstens eine Ausleitbahn in die wenigstens eine Vertiefung zurückzuführen. In diesem Fall muss verhindert werden, dass sich die Abtriebswelle mitdreht, da ansonsten die erforderliche Relativdrehung zwischen Antriebswelle und Abtriebswelle nicht zustande kommt. In diesem Fall kann daher der Freilauf geschlossen werden, sodass er die Drehung der Abtriebswelle in der zweiten Drehrichtung blockiert, wodurch ein Mitdrehen der Abtriebswelle in der zweiten Drehrichtung verhindert wird.

In einer bevorzugten Variante der zuletzt beschriebenen Ausführung der Erfindung ist der Freilauf ein Klinkenfreilauf, bei dem wenigstens eine Freilaufklinke in wenigstens einen Freilaufzahn eingreift. Dabei ist die wenigstens eine Freilaufklinke auf einem axial verschiebbaren, nicht drehbaren und gegen den wenigstens einen Freilaufzahn axial vorgespannten Freilaufklinkenring angeordnet, und der wenigstens eine Freilaufzahn ist an einer Stirnseite des ersten Führungsrings angeordnet.

Die Ausgestaltung als Klinkenfreilauf stellt eine übliche konstruktive Ausgestaltung eines Freilaufs dar und ist somit leicht zu realisieren. Insbesondere die Nutzung des ersten Führungsrings zur Anbringung des wenigstens einen Freilaufzahns kann vorteilhaft sein, weil hierdurch für die Anordnung des Freilaufzahns kein zusätzliches Bauteil erforderlich ist.

In einer bevorzugten Variante der zuvor beschriebenen Variante der Erfindung kann der Freilauf durch eine axiale Verschiebung des Freilaufklinkenrings geschlossen und geöffnet werden, welche durch eine axiale Verschiebung des zweiten Führungsrings bewirkbar ist.

Wenn der Übergang von der ersten zur zweiten Schaltstellung und/oder der Übergang von der dritten zur vierten Schaltstellung eine axiale Verschiebung des zweiten Führungsrings bewirken kann, ist es auch vorteilhaft, durch diese Verschiebung das Schließen und das Öffnen des Freilaufs zu bewirken. Da der Freilaufklinkenring axial verschiebbar ist, ist es weiterhin vorteilhaft, das Schließen und das Öffnen des Freilaufs auch durch eine solche axiale Verschiebung des Freilaufklinkenrings zu bewirken. Auf diese Weise werden somit die ohnehin vorhandenen Bewegungsmöglichkeiten der beteiligten Bauteile für das Schließen und Öffnen des Freilaufs ausgenutzt.

Die Bewirkung der axialen Verschiebung des Freilaufklinkenrings durch die axiale Verschiebung des zweiten Führungsrings kann hierbei direkt oder indirekt sein. Bei einer direkten Bewirkung kann sich der Freilaufklinkenring in axialer Richtung direkt an dem zweiten Führungsring abstützen. Bei einer indirekten Bewirkung kann zwischen dem zweiten Führungsring und dem Freilaufklinkenring noch wenigstens ein weiteres kraftübertragendes Bauteil angeordnet sein, insbesondere ein mit dem zweiten Führungsring verbundenes und mit diesem axial verschiebbares, aber seinerseits nicht drehbares Bauteil.

In einer bevorzugten Variante der zuvor beschriebenen Variante der Erfindung sind der Nockenring und der erste Führungsring axial zwischen dem Freilaufklinkenring und dem zweiten Führungsring angeordnet, und der zweite Führungsring oder ein mit dem zweiten Führungsring verbundenes und gegenüber diesem axial nicht verschiebbares Bauteil übergreift den Nockenring und den ersten Führungsring axial.

Wenn ein Schließen und Öffnen des Freilaufs durch eine axiale Verschiebung des zweiten Führungsrings und eine dadurch bewirkte axiale Verschiebung des Freilaufklinkenrings erfolgen soll, muss der zweite Führungsring die Möglichkeit haben, axial auf den Freilaufklinkenring einzuwirken. Wenn axial dazwischenliegend noch der Nockenring und der erste Führungsring angeordnet sind, lässt sich dies auf einfache Weise dadurch erreichen, dass der zweite Führungsring oder ein mit dem zweiten Führungsring verbundenes und gegenüber diesem axial nicht verschiebbares Bauteil die beiden letzteren Bauteile axial übergreift. Hiermit ist also auch der Fall eingeschlossen, dass die axiale Verschiebung des Freilaufklinkenrings durch die axiale Verschiebung des zweiten Führungsrings indirekt bewirkt wird und dass ein weiteres kraftübertragendes und mit dem zweiten Führungsring verbundenes, gegenüber diesem axial jedoch nicht verschiebbares Bauteil den Nockenring und den ersten Führungsring axial übergreift.

In einer weiteren bevorzugten Variante der zuletzt beschriebenen Ausführung der Erfindung ist der Freilauf in der ersten Schaltstellung geöffnet und in der zweiten Schaltstellung geschlossen.

Dies entspricht dem Erfordernis, dass der Freilauf geschlossen sein soll, wenn nach dem Übergang von der ersten in die zweite Schaltstellung die Drehrichtung des Motors von der ersten in die zweite Drehrichtung umgekehrt wird, um ein Mitdrehen der Abtriebswelle in der zweiten Drehrichtung zu verhindern.

Da im Gegensatz hierzu nach dem Übergang von der dritten in die vierte Schaltstellung, wie oben beschrieben, eine Umkehrung der Motordrehrichtung nicht erforderlich ist, ist es in diesem Fall nicht relevant, ob der Freilauf geschlossen oder geöffnet ist.

Die Erfindung betrifft weiterhin eine elektrische Handwerkzeugmaschine, insbesondere einen Schrauber, mit einer erfindungsgemäßen Abschaltkupplung. Hierdurch lassen sich die beiden oben beschriebenen Anwendungsfälle für den Rechtslauf bzw. Linkslauf des Motors der Handwerkzeugmaschine auf einfache Weise und zuverlässig realisieren.

Die Erfindung betrifft außerdem ein Verfahren zum Betrieb einer elektrischen Handwerkzeugmaschine, insbesondere eines Schraubers, mit einer erfindungsgemäßen Abschaltkupplung, welches die Schritte aufweist:
- Antreiben der Antriebswelle in der ersten Drehrichtung, während sich die Abschaltkupplung in der ersten Schaltstellung befindet,
- Anhalten der Drehung der Antriebswelle, wenn in der ersten Drehrichtung ein Drehmoment wirkt, welches das erste Auslösedrehmoment überschreitet, wobei die Abschaltkupplung durch die Überschreitung des ersten Auslösedrehmoments in die zweite Schaltstellung gebracht wird,
- Antreiben der Antriebswelle in der zweiten Drehrichtung, wodurch die Abschaltkupplung wieder in die erste Schaltstellung gebracht wird.

Dies entspricht dem oben bereits ausführlich beschriebenen ersten Anwendungsfall, bei dem sich die Abschaltkupplung öffnen soll, sobald das Nenn-Anzugsdrehmoment der herzustellenden Verschraubung erreicht wird, und sich danach wieder schließen soll.

Die Erfindung betrifft außerdem ein Verfahren zum Betrieb einer elektrischen Handwerkzeugmaschine, insbesondere eines Schraubers, mit einer Abschaltkupplung, welche weiterhin in die dritte und vierte Schaltstellung gebracht werden kann, welches die Schritte aufweist:
- Antreiben der Antriebswelle in der zweiten Drehrichtung, während sich die Abschaltkupplung in der dritten Schaltstellung befindet,
- weiteres Antreiben der Antriebswelle in der zweiten Drehrichtung, wenn in der zweiten Drehrichtung ein Drehmoment wirkt, welches das zweite Auslösedrehmoment überschreitet, wobei die Abschaltkupplung durch die Überschreitung des zweiten Auslösedrehmoments in die vierte Schaltstellung gebracht wird,
- weiteres Antreiben der Antriebswelle in der zweiten Drehrichtung, wodurch die Abschaltkupplung wieder in die dritte Schaltstellung gebracht wird.

Dies entspricht dem ebenfalls oben bereits ausführlich beschriebenen zweiten Anwendungsfall, bei dem sich die Abschaltkupplung öffnen soll, bevor das maximale Motordrehmoment erreicht wird, um den Motor vor Überlastung zu schützen, und sich danach wieder schließen soll.

Weitere Vorteile, Merkmale und Anwendungsmöglichkeiten der vorliegenden Erfindung ergeben sich aus der nachfolgenden Beschreibung im Zusammenhang mit den Figuren. Dabei zeigen:
- Fig. 1: eine Seitenansicht einer erfindungsgemäßen Abschaltkupplung;
- Fig. 2: einen Schnitt durch die Abschaltkupplung gemäß Fig. 1;
- Fig. 3: eine Explosionszeichnung der Abschaltkupplung gemäß Fig. 1;
- Fig. 4: die Bauteile der Abschaltkupplung gemäß Fig. 1, die den Kupplungsmechanismus bilden;
- Fig. 5: die Stirnseite des Nockenrings der Abschaltkupplung gemäß Fig. 1;
- Fig. 6: die Bauteile der Abschaltkupplung gemäß Fig. 1, die den Rücksetzmechanismus bilden.

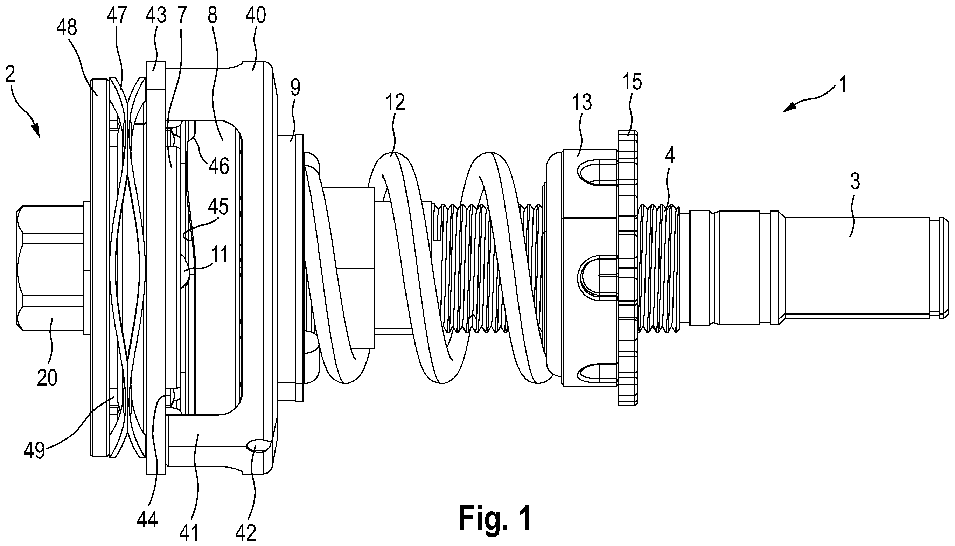

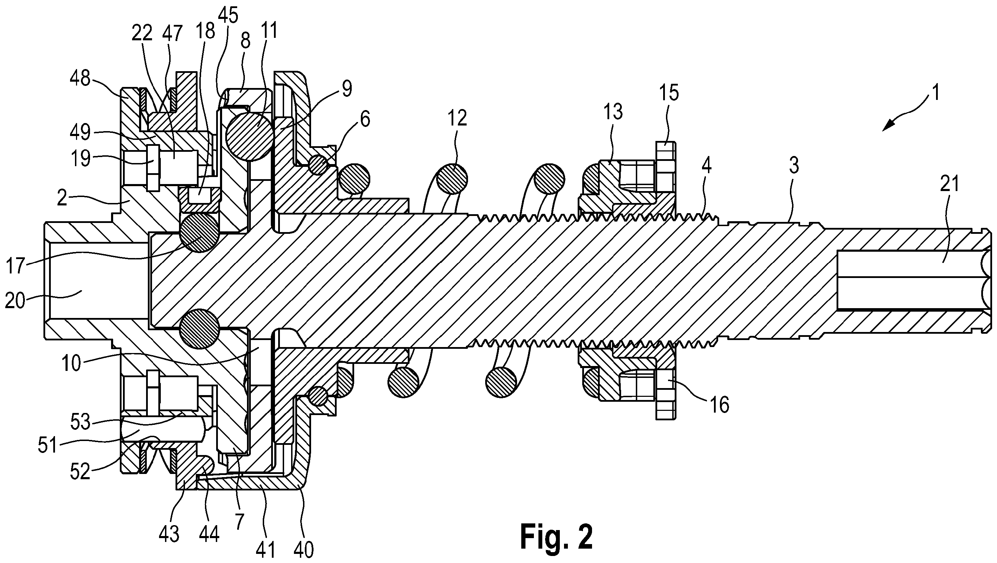

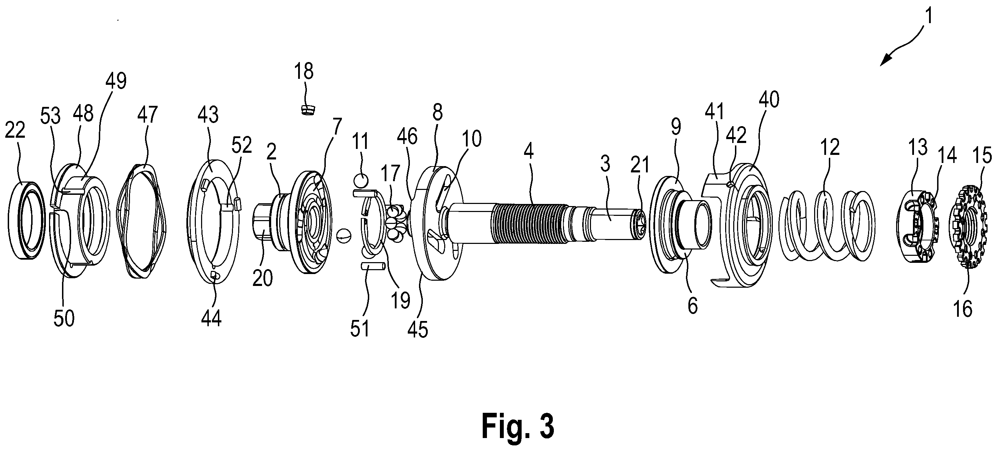

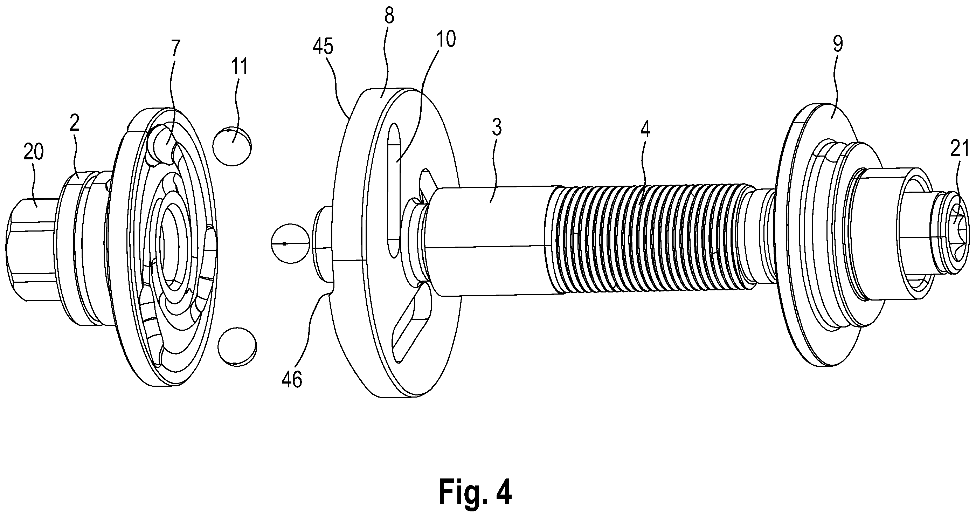

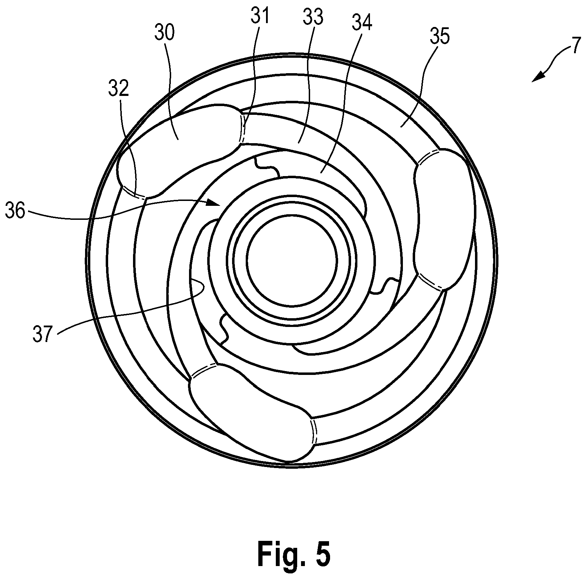

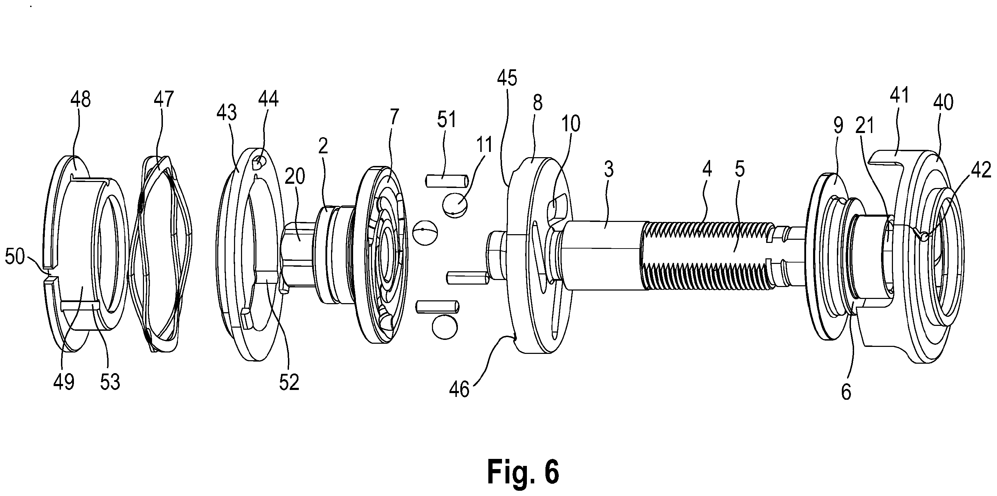

Die Erfindung wird im Folgenden anhand eines einzigen Ausführungsbeispiels einer erfindungsgemäßen Abschaltkupplung 1 ausführlich beschrieben. Hierbei zeigen die Fig. 1, 2 und 3 die gesamte Abschaltkupplung 1 in verschiedenen Ansichten, nämlich als Seitenansicht (Fig. 1), Schnitt (Fig. 2) und Explosionszeichnung (Fig. 3). Die Fig. 4, 5 und 6 zeigen einzelne Bauteile bzw. Teilbaugruppen der Abschaltkupplung 1, nämlich den Kupplungsmechanismus, welcher das Öffnen und Schließen der Abschaltkupplung 1 bewirkt (Fig. 4), die Stirnseite des Nockenrings 7 mit den verschiedenen Aussparungen 30 bis 35 für die Kugeln 11 (Fig. 5) sowie den Rücksetzmechanismus, welcher beim Öffnen der Abschaltkupplung 1 einen Freilauf schließt (Fig. 6).

Die Abschaltkupplung 1 ist zum Einbau in eine elektrische, rotierende Handwerkzeugmaschine (in den Figuren nicht dargestellt) vorgesehen, insbesondere in einen Schrauber, wie er beispielsweise in der industriellen Fertigung eingesetzt wird. Die Abschaltkupplung 1 ist dabei im Antriebsstrang der Handwerkzeugmaschine zwischen dem Antriebsmotor und einer Werkzeugaufnahme, insbesondere für ein Schraubwerkzeug wie eine Schrauberklinge oder ein Innen- oder Außensechskantwerkzeug, angeordnet. Die erfindungsgemäße Abschaltkupplung 1 kann jedoch auch in anderen Handwerkzeugmaschinen eingesetzt werden.

Die Bauteile der Abschaltkupplung 1 sind im Wesentlichen alle koaxial zu einer Achse angeordnet, welche gleichzeitig die Rotationsachse der drehbaren Bauteile bildet. Gleichzeitig stützt sich die Abschaltkupplung 1 mit einem gehäusefesten Ring 48 am (nicht dargestellten) Gehäuse der Handwerkzeugmaschine ab und ist an dieser Stelle mit dem Gehäuse direkt oder mittelbar starr verbunden.

Die Abschaltkupplung 1 weist eine Antriebswelle 2 auf, deren äußeres Ende beispielsweise in Form eines Außensechskants 20 ausgebildet ist. Der Außensechskant 20 ist zur dauerhaften formschlüssigen und drehfesten Kupplung mit dem Antriebsmotor (nicht dargestellt) der Handwerkzeugmaschine vorgesehen. Koaxial zur Antriebswelle 2 weist die Abschaltkupplung 1 eine Abtriebswelle 3 auf, an deren äußerem Ende ein Innensechskant 21 ausgebildet ist. Der Innensechskant 21 ist zur formschlüssigen, drehfesten Aufnahme von auswechselbaren Werkzeugen, insbesondere Schraubereinsätzen beliebiger Art (nicht dargestellt), vorgesehen. Die Werkzeuge werden vorzugsweise in den Innensechskant 21 von Hand eingesteckt und vorzugsweise durch Reibung, durch einen Rastmechanismus oder magnetisch gehalten.

Die Antriebswelle 2 und die Abtriebswelle 3 sind gegeneinander durch ein Kugellager 17 drehbar gelagert. Die Kugeln des Kugellagers 17 werden bei der Montage der Abschaltkupplung 1 durch eine radiale Bohrung in der äußeren Lagerschale in der Antriebswelle 2 einzeln eingefüllt, und diese Bohrung wird sodann mit einem Stopfen 18 verschlossen.

Die Abschaltkupplung 1 hat die Aufgabe, beim Betrieb der Handwerkzeugmaschine im geschlossenen Zustand ein Drehmoment von der Antriebswelle 2 und damit von dem Antriebsmotor auf die Abtriebswelle 3 und damit auf das Werkzeug zu übertragen. Sobald das von der Antriebswelle 2 auf die Abtriebswelle 3 übertragene Drehmoment ein bestimmtes, einstellbares Auslösedrehmoment überschreitet, soll sich die Abschaltkupplung 1 öffnen, sodass kein Drehmoment mehr von der Antriebswelle 2 auf die Abtriebswelle 3 übertragbar ist.

Insbesondere soll das Öffnen der Abschaltkupplung 1 beim Überschreiten des Auslösedrehmoments die beiden oben beschriebenen Anwendungsfälle unterstützen:
Beim Herstellen einer Schraubverbindung im Rechtslauf der Handwerkzeugmaschine soll sich die Abschaltkupplung 1 öffnen, sobald das Nenn-Anzugsdrehmoment der Schraubverbindung erreicht ist (erster Anwendungsfall). Beim Lösen einer Schraubverbindung im Linkslauf der Handwerkzeugmaschine soll sich die Abschaltkupplung 1 dagegen öffnen, wenn das erforderliche Lösedrehmoment größer ist als das maximale Motordrehmoment, um den Motor der Handwerkzeugmaschine vor einer Überlastung zu schützen (zweiter Anwendungsfall).

Da sich die beiden Anwendungsfälle unterscheiden, kann auch das jeweils erforderliche Auslösedrehmoment unterschiedlich sein. Da sich insbesondere im ersten Anwendungsfall das Nenn-Anzugsdrehmoment von Schraubverbindung zu Schraubverbindung unterscheidet, soll das Auslösedrehmoment in diesem Fall durch den Benutzer der Handwerkzeugmaschine vorwählbar sein.

Um das gewünschte Öffnen der Abschaltkupplung 1 beim Überschreiten des jeweiligen Auslösedrehmoments im Rechts- bzw. Linkslauf zu realisieren, ist die Antriebswelle 2 drehfest - und im Ausführungsbeispiel einstückig - mit einem Nockenring 7 verbunden. In der axial zur Abtriebswelle 3 hin gerichteten Stirnseite des Nockenrings 7 sind verschiedene Aussparungen mit unterschiedlichen axialen Niveaus ausgebildet. Diese Aussparungen sind derart ausgebildet, dass darin mehrere, im Ausführungsbeispiel drei, Kugeln 11 aufgenommen werden und sich darin im Wesentlichen in Umfangsrichtung bewegen können. Die genaue Anordnung und die Funktionsweise der Aussparungen im Nockenring 7 werden im Folgenden noch im Detail beschrieben.

Für jede Kugel 11 ist wenigstens eine Stelle in den Aussparungen im Nockenring 7 vorgesehen, an der sich das axiale Niveau der Aussparung sprunghaft ändert. Mit anderen Worten weist die Aussparung an dieser Stelle eine axiale Stufe auf. Die "senkrechte" Wand der Stufe verläuft dabei jedoch nicht exakt in axialer Richtung, sondern ist gegenüber dieser geneigt, und zwar derart, dass die Stufe vom niedrigeren axialen Niveau (im Sinne einer tieferen Aussparung in der Stirnseite des Nockenrings 7) hin zum höheren axialen Niveau eine steile, aber nicht senkrechte Rampe bildet.

Im geschlossenen Zustand der Abschaltkupplung 1 befindet sich die Kugel 11 in der Aussparung auf der Seite der Stufe mit dem niedrigeren axialen Niveau und liegt an der Stufe derart an, dass die Stufe bei einer vorgegebenen Drehrichtung der Antriebswelle 2 in Umfangsrichtung gegen die Kugel 11 drückt. Auf diese Weise kann in diesem Zustand der Abschaltkupplung 1 ein Drehmoment zunächst von dem Nockenring 7 auf die Kugel 11 übertragen werden. Die Abschaltkupplung 1 befindet sich dann in einer ersten Schaltstellung.

Axial benachbart zum Nockenring 7 ist ein erster Führungsring 8 angeordnet, welcher drehfest - im Ausführungsbeispiel einstückig - mit der Abtriebswelle 3 verbunden ist. Somit sind sowohl der Nockenring 7 als auch der erste Führungsring 8 axial nicht beweglich.

Der erste Führungsring 8 weist für jede Kugel 11 eine Durchgangsöffnung 10 auf, in welcher der axial über den Nockenring 7 hinausragende Teil der Kugel 11 geführt wird. Jede Durchgangsöffnung 10 ist geradlinig, also in Form eines Langlochs, ausgebildet und erstreckt sich in dem ersten Führungsring 8 von einem radial außen gelegenen Ende zu einem radial innen gelegenen Ende in einer Richtung, welche schräg zur radialen Richtung verläuft. Das radial außen angeordnete Ende des Langlochs ist vom Außenumfang des ersten Führungsrings 8 beabstandet angeordnet. Dadurch ergibt sich eine zwanghafte Führung jeder Kugel 11 in einem Langloch. Der Verlust einer Kugel 11 ist nicht möglich. Die axiale Ausdehnung des ersten Führungsrings 8 ist derart bemessen, dass jede Kugel 11 in jeder möglichen Position, die sie in einer Aussparung im Nockenring 7 einnehmen kann, mit ihrem größten Durchmesser an den Innenwänden der zugehörigen Durchgangsöffnung 10 anliegt und dass gleichzeitig ein Teil der Kugel 11 axial auf der dem Nockenring 7 gegenüberliegenden Seite aus der Durchgangsöffnung 10 herausragt. Der erste Führungsring 8 mit den darin angeordneten Durchgangsöffnungen 10 wirkt somit wie ein Käfig für die Kugeln 11. Auf diese Weise kann stets ein Drehmoment zwischen den Kugeln 11 und dem zweiten Führungsring 8 und damit der Abtriebswelle 3 übertragen werden.

Auf der dem Nockenring 7 gegenüberliegenden Seite des ersten Führungsrings 8 ist ein zweiter Führungsring 9 angeordnet, dessen zum ersten Führungsring 8 hin gewandte Stirnfläche vollständig eben ist. Der zweite Führungsring 9 ist auf der Abtriebswelle 3 drehbar und axial verschiebbar gelagert, vorzugsweise durch ein Gleitlager. Der zweite Führungsring 9 ist, wie im Folgenden noch näher erläutert wird, axial gegen den Nockenring 7 vorgespannt, sodass seine ebene Stirnfläche gegen die Kugeln 11 gepresst wird.

Auf diese Weise werden die Kugeln 11 in allen Richtungen zwangsgeführt, nämlich in axialer Richtung durch die Aussparungen in der Stirnseite des Nockenrings 7 und durch die ebene Stirnseite des zweiten Führungsrings 9 sowie in radialer und in Umfangsrichtung durch die Durchgangsöffnungen 10 im ersten Führungsring 8. Durch diese Zwangsführung der Kugeln 11 ist es ausgeschlossen, dass sich die Kugeln 11 bei der Rotation der Antriebswelle 2 und der Abtriebswelle 3 unkontrolliert bewegen und innerhalb des Gehäuses der Handwerkzeugmaschine verloren gehen.

Aufgrund der bisherigen Beschreibung wird deutlich, dass im geschlossenen Zustand der Abschaltkupplung 1 ein Drehmoment von der Antriebswelle 2 über den Nockenring 7, die Kugeln 11 und den ersten Führungsring 8 auf die Abtriebswelle 3 übertragen werden kann. Der zweite Führungsring 9 ist an der Drehmomentübertragung selbst nicht beteiligt, sondern bildet einen Teil der axialen Führung der Kugeln 11.

Wie oben erwähnt, liegt jede Kugel 11 im geschlossenen Zustand der Abschaltkupplung 1 an der zugehörigen Stufe in einer Aussparung in der Stirnseite des Nockenrings 7 an, wobei die Stufe eine steile, aber nicht senkrechte Rampe bildet und ein Drehmoment in der vorgegebenen Drehrichtung der Antriebswelle 2 von der Rampe auf die Kugel 11 übertragen werden kann. Die Oberfläche der Kugel 11 und die Rampe bilden dabei ein Keilgetriebe. Gleichzeitig ist die Kugel 11 durch den zweiten Führungsring 9 axial gegen die Stirnfläche des Nockenrings 7 vorgespannt. Diese Vorspannung ist derart bemessen, dass, wenn das zwischen Rampe und Kugel 11 übertragene Drehmoment ein erstes Auslösedrehmoment übersteigt, die Kugel 11 aufgrund der Keilwirkung an der Rampe "hinaufsteigt" und in den axial höher gelegenen Teil der Aussparung in der Stirnfläche des Nockenrings 7 gelangt.

Wie im Folgenden noch genauer erläutert wird, ist diese Aussparung so angeordnet, dass die Kugel 11 sich in dem axial höher gelegenen Teil der Aussparung in Umfangsrichtung frei bewegen kann. In diesem Zustand der Abschaltkupplung 1 kann somit kein Drehmoment mehr zwischen des Nockenrings 7 und der Kugel 11 - und damit auch nicht mehr zwischen der Antriebswelle 2 und der Abtriebswelle 3 - übertragen werden. Die Abschaltkupplung 1 befindet sich dann in einer zweiten Schaltstellung und im geöffneten Zustand.

Die Rampe in der Aussparung in der Stirnfläche des Nockenrings 7 wirkt somit als eine erste Schaltnocke 31, deren Überwindung durch die Kugel 11 in einer ersten Drehrichtung einen Übergang der Abschaltkupplung 1 vom geschlossenen Zustand in den geöffneten Zustand bewirkt. In einer zweiten, der ersten Drehrichtung entgegengesetzten Drehrichtung wirkt diese Rampe ebenfalls als erste Schaltnocke 31, deren Überwindung durch die Kugel 11 einen Übergang der Abschaltkupplung vom geöffneten Zustand in den geschlossenen Zustand bewirkt.

Die Stirnseite des Nockenrings 7 mit den darin befindlichen Aussparungen für die Kugeln 11 wird nun im Detail beschrieben. Im Ausführungsbeispiel sind drei Kugeln 11 vorgesehen, und die Stirnseite des Nockenrings 7 weist für jede Kugel 11 um 120 Grad versetzte Aussparungen und damit eine dreizählige Drehsymmetrie auf.

Die Aussparungen für eine Kugel 11 umfassen zunächst eine langgestreckte Kugeltasche 30, welche ein tieferes axiales Niveau aufweist als alle anderen Aussparungen in der Stirnseite des Nockenrings 7. Die Kugeltasche 30 erstreckt sich annähernd in Umfangsrichtung, ist jedoch zu einem Ende hin leicht nach radial innen gekrümmt.

Die beiden Enden der Kugeltasche 30, an denen das tiefe axiale Niveau der Kugeltasche 30 in das höhere axiale Niveau der Umgebung der Kugeltasche 30 übergeht, bilden somit eine erste Schaltnocke 31 für eine Drehmomentübertragung bei einer Rechtsdrehung bzw. eine zweite Schaltnocke 32 für eine Drehmomentübertragung bei einer Linksdrehung der Antriebswelle 2 auf die Abtriebswelle 3.

Wenn bei einer Rechtsdrehung der Antriebswelle 2 das erste Auslösedrehmoment überschritten wird, überwindet die Kugel 11, wie oben beschrieben, die erste Schaltnocke 31 und gelangt in die sich anschließende Ausleitbahn 33, welche spiralförmig nach radial innen führt. Die Ausleitbahn 33 hat vorzugsweise die Form einer logarithmischen Spirale, um eine gleichmäßige, ruckfreie Bewegung der Kugel 11 zu ermöglichen. Auch die leichte Krümmung der Kugeltasche 30 nach radial innen ist derart gewählt, dass die Kugeltasche 30 mit einem "glatten" Verlauf in die Ausleitbahn 33 übergeht, um gleichfalls eine gleichmäßige, ruckfreie Bewegung der Kugel 11 zu ermöglichen.

Gleichzeitig mit ihrer Bewegung nach radial innen in der Ausleitbahn 33 bewegt sich die Kugel 11 auch entlang der Längsausdehnung der Durchgangsöffnung 10 in dem ersten Führungsring 8 radial nach innen. Da die Durchgangsöffnung 10 nicht radial, sondern gegenüber einer radialen Richtung geneigt angeordnet ist, kann die Kugel 11 an der Innenfläche der Durchgangsöffnung 10 in einem schrägen Winkel hinabgleiten, wodurch die Reibung vermindert und eine mögliche Selbsthemmung bei der Bewegung der Kugel 11 in der Durchgangsöffnung 10 verhindert wird.

Die Ausleitbahn 33 mündet im radial inneren Bereich der Stirnseite des Nockenrings 7 in eine geschlossene, kreisförmige Freilaufbahn 34 mit einem konstanten axialen Niveau, in der die Kugel 11 beliebig lange umlaufen kann.

Wenn sich die Kugel 11 in der Ausleitbahn 33 oder in der Freilaufbahn 34 befindet und ihr somit kein mechanischer Widerstand in der Umfangsrichtung entgegengesetzt wird, kann kein Drehmoment mehr von der Antriebswelle 2 auf die Abtriebswelle 3 übertragen werden. Die Abschaltkupplung 1 befindet sich dann folglich im geöffneten Zustand und verhindert so, dass das Nenn-Anzugsdrehmoment einer Schraubverbindung überschritten wird.

Da die Ausleitbahn 33 und die Freilaufbahn 34 ein höheres axiales Niveau haben als die Kugeltasche 30, bewegt sich die Kugel 11 in axialer Richtung hin zur Abtriebswelle 3. Dadurch wird auch der zweite Führungsring 9, welcher gegen die Kugeln 11 und den Nockenring 7 vorgespannt ist, in dieser axialen Richtung verschoben.

Der zweite Führungsring 9 ist gegenüber einem Schiebering 40, dessen Funktion noch genauer beschrieben wird, durch ein Kugellager 6 drehbar gelagert, sodass der Schiebering 40 selbst nicht mitrotiert. Der zweite Führungsring 9 und der Schiebering 40 sind durch das Kugellager 6 zu einer Einheit verbunden und können sich somit axial nicht gegeneinander bewegen, sondern nur gemeinsam axial verschoben werden.

Der Schiebering 40 weist an seinem äußeren Umfang eine Öffnung 42 auf, die einen Positionsindikator, beispielsweise einen Permanentmagneten (nicht dargestellt), enthalten kann. Im Gehäuse der Handwerkzeugmaschine ist ein entsprechender Sensor, beispielsweise ein Magnetsensor (ebenfalls nicht dargestellt), angebracht, welcher die axiale Verschiebung des Positionsindikators und damit des Schieberings 40 detektieren kann.

Der Sensor erkennt aufgrund der axialen Verschiebung des Schieberings 40, dass die Abschaltkupplung 1 in den geöffneten Zustand übergegangen ist, und gibt ein entsprechendes Signal an die Steuerung des Antriebsmotors der Handwerkzeugmaschine weiter. Daraufhin wird der Motor abgeschaltet. Nach dem Stillstand der Drehbewegung des Motors wird die Drehrichtung der Antriebswelle 2 geändert. Die Kugel 11, welche in der Freilaufbahn 34 (in der in Fig. 5 dargestellten Orientierung des Nockenrings 7) im Uhrzeigersinn umläuft, läuft nach der Umkehr der Drehrichtung nunmehr gegen den Uhrzeigersinn um und gelangt dabei an der "Abzweigung" oder Mündung 36 von einer der Ausleitbahnen 33 wieder in diese Ausleitbahn 33 und an deren Ende wieder in die zugehörige Kugeltasche 30. Die aufgrund der Anordnung und des unterschiedlichen Niveaus der Freilaufbahn 34 bzw. der Ausleitbahn 33 entstehende Führung 37 stellt sicher, dass an der Mündung 36 immer ein Wechsel der Kugel 11 von der Freilaufbahn 34 in die Ausleitbahn 33 erfolgt. Dies ist insbesondere wichtig, wenn die Abschaltkupplung 1 mehr als nur eine Kugel 11 umfasst. Dadurch wird verhindert, dass eine Kugel 11 sich in der Freilaufbahn 34 und eine andere Kugel 11 sich in der Ausleitbahn 33 befindet. Dies stellt ein prozesssicheres Öffnen und Schließen der Abschaltkupplung 1 sicher. Die mit dem Überführen der Kugel 11 in die Kugeltasche 30 verbundene abermalige axiale Bewegung des Schieberings 40 in Richtung der Antriebswelle 2 wird wiederum von dem Sensor erkannt, woraufhin die Motorsteuerung die Drehung des Motors anhält. Damit befindet sich die Abschaltkupplung 1 wieder im geschlossenen Zustand.

Bei einer Linksdrehung der Antriebswelle 2 liegt die Kugel 11 dagegen an dem der ersten Schaltnocke 31 entgegengesetzten Ende der Kugeltasche 30 an der zweiten Schaltnocke 32 an, sodass ein Drehmoment vom Nockenring 7 auf die Kugel 11 und, wie oben beschrieben, über den ersten Führungsring 8 auf die Abtriebswelle 3 übertragen werden kann. Die Abschaltkupplung 1 befindet sich dann in einer dritten Schaltstellung.

Wenn nun bei der Linksdrehung der Antriebswelle 2 das zweite Auslösedrehmoment überschritten wird, so überwindet die Kugel 11 die zweite Schaltnocke 32 und gelangt in die sich anschließende Nockenbahn 35. Die Nockenbahn 35 läuft am äußeren radialen Rand des Nockenrings 7 kreisförmig, konzentrisch zur Freilaufbahn 34 um und wird nur von den Kugeltaschen 30 unterbrochen. Dabei weist die Nockenbahn 35 abgesehen von den Kugeltaschen 30 ein konstantes axiales Niveau auf, welches höher als das der Kugeltaschen 30 ist.

Vorzugsweise ist die Rampe am Ende der Kugeltasche 30, welche die zweite Schaltnocke 32 bildet, steiler ausgebildet als die Rampe am Ende der Kugeltasche 30, welche die erste Schaltnocke 31 bildet. Damit ist vorzugsweise auch das zweite Auslösedrehmoment größer als das erste Auslösedrehmoment.

In der Nockenbahn 35 kann die Kugel 11 zumindest bis zur nächsten Kugeltasche 30, d. h. über einen Drehwinkelbereich von 5 Grad bis 120 Grad, umlaufen, ohne dass ihr ein mechanischer Widerstand in der Umfangsrichtung entgegengesetzt wird. Somit kann während dieser Bewegung der Kugel 11 kein Drehmoment von der Antriebswelle 2 auf die Abtriebswelle 3 übertragen werden. Die Abschaltkupplung 1 befindet sich dann in einer vierten Schaltstellung. In der vierten Schaltstellung befindet sich die Abschaltkupplung 1 auch im geöffneten Zustand und verhindert, dass das maximale Motordrehmoment überschritten wird, insbesondere, wenn dieses nicht ausreicht, um eine Schraubverbindung zu lösen.

Auch in diesem Fall wird der Schiebering 40 beim Öffnen der Abschaltkupplung 1 axial verschoben, was wiederum von dem Sensor detektiert wird. Daraufhin lässt die Motorsteuerung die Linksdrehung des Motors beispielsweise mit einer geringen Drehzahl weiterlaufen, bis jede Kugel 11 wieder in die jeweilige Kugeltasche 30 gefallen ist. Eine vorherige Umkehrung der Drehrichtung des Motors ist in diesem Fall nicht erforderlich. Damit befindet sich die Abschaltkupplung 1 wieder im geschlossenen Zustand. Auf das Weiterlaufenlassen des Motors mit geringer Drehzahl kann sogar verzichtet werden, da spätestens bei der nächsten Benutzung der Handwerkzeugmaschine - gleichgültig ob im Rechts- oder im Linkslauf - die Kugeln 11 wieder in die Kugeltaschen 30 fallen und sich die Abschaltkupplung 1 spätestens dann wieder im geschlossenen Zustand befindet.

Das erste und das zweite Auslösedrehmoment können in Abhängigkeit der gewünschten Anwendung, insbesondere in Abhängigkeit vom Nenn-Anzugsdrehmoment einer herzustellenden Schraubverbindung, über die axiale Vorspannung des zweiten Führungsrings 9 gegen die Kugeln 11 und den Nockenring 7 voreingestellt werden.

Diese Vorspannung wird durch eine axial vorgespannte Druckfeder 12 erzeugt, welche als Spiralfeder ausgebildet ist und um die Abtriebswelle 3 herumläuft. Die Druckfeder 12 stützt sich an einem Ende an dem zweiten Führungsring 9 und am anderen Ende an einem Druckring 13 ab, welcher an seiner Innenseite mit einem Vorsprung (nicht dargestellt) in eine Abflachung 5 (Fig. 6) auf der Abtriebswelle 3 eingreift und somit zwar gegenüber der Abtriebswelle 3 axial verschiebbar, aber nicht drehbar ist. Auf der der Druckfeder 12 abgewandten Seite des Druckrings 13 ist ein Stellring 15 auf ein Gewinde 4 der Abtriebswelle 3 aufgeschraubt. Das Gewinde 4 ist vorzugsweise ein Linksgewinde. In die zum Stellring 15 hin gewandte Stirnseite des Druckrings 13 sind in gleichmäßigen Winkelabständen mehrere (im Ausführungsbeispiel sechs) Rastkugeln 14 eingelassen, welche in mehrere (im Ausführungsbeispiel zwölf), ebenfalls in gleichmäßigen Winkelabständen angeordnete Bohrungen 16 auf der gegenüberliegenden Stirnseite des Stellrings 15 eingreifen können. Der Stellring 15 kann somit gegen die Federkraft der Druckfeder 12 um jeweils einen bestimmten Winkel (im Ausführungsbeispiel 30 Grad) gedreht werden, was der Benutzer als einzelne Raststufen wahrnimmt, und dabei weiter auf die Abtriebswelle 3 aufgeschraubt bzw. von der Abtriebswelle 3 abgeschraubt werden. Mit jeder Raststufe erhöht bzw. verringert sich die Vorspannung der Druckfeder 12 und damit das erste und das zweite Auslösedrehmoment. Der Stellring 15 ist in der Handwerkzeugmaschine von einem, vorzugsweise aus einem griffigen Kunststoff hergestellten, Betätigungsring (nicht dargestellt) umgeben, welcher vom Bediener leicht mit der Hand verstellt werden kann.

Wie oben beschrieben, wird die Drehrichtung des Motors kurzzeitig von einem Rechtslauf in einen Linkslauf umgekehrt, wenn sich die Kupplung im Rechtslauf des Motors durch eine Überschreitung des ersten Auslösedrehmoments geöffnet hat, damit sich die Kugeln 11 durch eine relative Drehung der Antriebswelle 2 und damit des Nockenrings 7 gegenüber den Kugeln 11 nach links, also gegen den Uhrzeigersinn, wieder in ihre Kugeltaschen 30 zurückbewegen und sich die Abschaltkupplung 1 dadurch nach dem Öffnen wieder schließt. Da die Kugeln 11 durch den ersten Führungsring 8 zwangsgeführt werden und der erste Führungsring 8 drehfest mit der Abtriebswelle 3 verbunden ist, muss dabei verhindert werden, dass die Abtriebswelle 3 sich bei der Linksdrehung der Antriebswelle 2 mitdreht, da sonst keine solche relative Drehung zwischen der Antriebswelle 2 und der Abtriebswelle 3 zustande kommt.

Das Mitdrehen der Abtriebswelle 3 kann beispielsweise dadurch verhindert werden, dass das Werkzeug nach der Umkehrung der Drehrichtung des Motors noch mit der zuvor befestigten Schraube im Eingriff bleibt. Es kann jedoch im praktischen Einsatz der Handwerkzeugmaschine nicht sichergestellt werden, dass der Benutzer das Werkzeug unmittelbar nach dem Erreichen des Nenn-Anzugsdrehmoments der Schraube und dem damit verbundenen Öffnen der Abschaltkupplung 1 das Werkzeug im Eingriff mit der Schraube behält. Sobald das Werkzeug sich außer Eingriff der Schraube befindet, ist das Mitdrehen der Abtriebswelle 3 nicht mehr ausgeschlossen.

Um das Mitdrehen der Abtriebswelle 3 in jedem Zustand der Abschaltkupplung 1 nach der Umkehrung der Drehrichtung des Motors, d. h. beim Linkslauf des Motors, zuverlässig zu verhindern, weist die Abschaltkupplung 1 einen Rücksetzmechanismus auf, welcher im Folgenden beschrieben wird (vgl. auch Fig. 6).

Der Rücksetzmechanismus wird beim Öffnen der Abschaltkupplung 1 durch die zuvor beschriebene axiale Bewegung des Schieberings 40 ausgelöst. Wie am besten in Fig. 2 zu erkennen, übergreift der Schiebering 40 radial außen mit mehreren (im Ausführungsbeispiel drei) in Richtung der Antriebswelle 2 gerichteten, über den Umfang des Schieberings 40 verteilten Klauen 41 den zweiten Führungsring 9, den ersten Führungsring 8, die Kugeln 11 und den Nockenring 7. Die Klauen 41 stützen sich an einem radial äußeren Bereich der Stirnfläche eines Freilaufklinkenrings 43 ab, welcher einen etwa gleich großen Durchmesser wie der Schiebering 40 und damit einen etwas größeren Durchmesser als der Nockenring 7, der erste Führungsring 8 und der zweite Führungsring 9 aufweist. Anstelle von mehreren Klauen 41 kann der Schiebering 40 auch eine umlaufende, zylindrische Mantelfläche aufweisen, welche sich gleichermaßen an dem radial äußeren Bereich der Stirnfläche des Freilaufklinkenrings 43 abstützt.

Der Freilaufklinkenring 43 ist axial verschiebbar, aber nicht drehbar, da er durch mehrere axial angeordnete Führungsstifte 51, axial geführt wird. Dazu weist der Freilaufklinkenring 43 Nuten 52 auf, die zusammen mit den Führungsstiften 51 eine axiale Gleitführung bilden. Die Führungsstifte 51 sind wiederum auf der Außenseite eines zylindrischen Abschnitts 49 eines gehäusefesten Rings 48 starr mit diesem verbunden, indem sie in Nuten 53 in dem zylindrischen Abschnitt 49 des gehäusefesten Rings 48 eingelassen sind. Der gehäusefeste Ring 48 ist über mehrere Aussparungen 50 in seinem Umfang mit Vorsprüngen (nicht dargestellt) im Gehäuse der Handwerkzeugmaschine mit diesem starr verbunden und ist somit weder axial verschiebbar noch drehbar. Auf diese Weise ist der Freilaufklinkenring 43 auf dem zylindrischen Abschnitt 49 des gehäusefesten Rings 48 axial verschiebbar gelagert, kann sich aber aufgrund der Führung durch die Führungsstifte 51 nicht drehen.

Der gehäusefeste Ring 48 hat weiterhin die Funktion, von radial außen ein Kugellager 22 abzustützen, in dem radial innen die Antriebswelle 2 gelagert ist. Das Lager zwischen dem gehäusefesten Ring 48 und der Antriebswelle 2 ist weiterhin durch einen Sicherungsring 19 gesichert.

Weiterhin ist zwischen einem Flansch des gehäusefesten Rings 48 mit einem größeren Durchmesser als dem des zylindrischen Abschnitts 49 und einem Flansch des Freilaufklinkenrings 43 mit einem etwa gleich großen Durchmesser wie dem des Flanschs des gehäusefesten Rings 48 eine Wellenfeder 47 angeordnet, welche den Freilaufklinkenring 43 axial in Richtung der Abtriebswelle 3 vorspannt. Anstelle einer Wellenfeder kann hierfür beispielsweise auch eine andere Druckfeder, insbesondere eine Spiralfeder, eingesetzt werden.

Die Federkraft der Wellenfeder 47 ist dabei stets kleiner als die Federkraft der Druckfeder 12, sodass die Vorspannung der Einheit aus dem Schiebering 40 und dem zweiten Führungsring 9 gegen die Kugeln 11 nicht aufgehoben wird.

Der Freilaufklinkenring 43 weist auf seiner zum ersten Führungsring 8 hin gerichteten Stirnseite über seinen Umfang verteilt mehrere Vorsprünge auf, welche als Freilaufklinken 44 dienen (Fig. 6). Die Stirnseite 45 eines zylindrischen Ansatzes des ersten Führungsrings 8, welcher radial außen den Nockenring 7 axial übergreift, hat in Umfangsrichtung gesehen einen sägezahnartigen Verlauf. Hierdurch werden mehrere Freilaufzähne 46 gebildet, in welche die Freilaufklinken 44 eingreifen können. Im geöffneten Zustand der Abschaltkupplung 1, wenn sich die Kugeln 11 außerhalb der Kugeltaschen 30 befinden, wird der Freilaufklinkenring 43 durch die Federkraft der Wellenfeder 47 axial an den ersten Führungsring 8 angedrückt. Dann können die Freilaufklinken 44 in Eingriff mit den Freilaufzähnen 46 gelangen, und der Freilauf befindet sich im geschlossenen Zustand. Die Richtung des sägezahnartigen Verlaufs der Stirnseite 45 des zylindrischen Ansatzes des ersten Führungsrings 8 und damit die Anordnung der Freilaufzähne 46 ist so gewählt, dass sich der erste Führungsring 8 und damit die Abtriebswelle 3 nur rechtsherum, aber nicht linksherum drehen können.

Bei geschlossener Abschaltkupplung 1 drücken die Klauen 41 des Schieberings 40 den Freilaufklinkenring 43 gegen die Federkraft der Wellenfeder 47 axial von dem ersten Führungsring 8 weg, sodass die Freilaufklinken 44 nicht in die Freilaufzähne 46 eingreifen können und der Freilauf geöffnet ist und keine Wirkung hat.

Bei geöffneter Abschaltkupplung 1 drücken die Klauen 41 des Schieberings 40 dagegen nicht gegen den Freilaufklinkenring 43, da die Einheit aus Schiebering 40 und zweitem Führungsring 9 durch die Kugeln 11 axial in Richtung der Abtriebswelle 3 verschoben ist, sodass die Wellenfeder 47 den Freilaufklinkenring 43 axial gegen den ersten Führungsring 8 drückt, sodass die Freilaufklinken 44 in die Freilaufzähne 46 eingreifen können und der Freilauf geschlossen ist. Dies bewirkt das gewünschte Verhalten des Freilaufs, dass dieser nur im geöffneten Zustand der Abschaltkupplung 1, in dem auch die Drehrichtungsumkehr des Motors erfolgt, geschlossen ist und somit bei einem Linkslauf des Motors die Abtriebswelle 3 am Mitdrehen hindert.

In dem Fall, dass bei einem Linkslauf des Motors die Abschaltkupplung 1 aufgrund einer Überschreitung des zweiten Auslösedrehmoments geöffnet wird, schließt sich der Freilauf, und die Kugeln 11 befinden sich in der Nockenbahn 35. Dies hat aber keine weiteren Auswirkungen, da, wie oben beschrieben, in diesem Fall die Kugeln nicht von der Freilaufbahn 34 in die Kugeltaschen 30 zurückkehren müssen und somit auch keine Drehrichtungsumkehr des Motors erforderlich ist, bei der ein Mitdrehen der Abtriebswelle 3 verhindert werden muss. Die Zustandsänderung vom offenen in den geschlossenen Zustand des Freilaufs ist bei einem Öffnen der Abschaltkupplung 1 während des Linkslaufs des Motors ohne Wirkung.

### Bezugszeichenliste

- 1: Abschaltkupplung
- 2: Antriebswelle
- 3: Abtriebswelle
- 4: Gewinde
- 5: Abflachung
- 6: Kugellager
- 7: Nockenring
- 8: Erster Führungsring
- 9: Zweiter Führungsring
- 10: Durchgangsöffnung
- 11: Kugel
- 12: Druckfeder
- 13: Druckring
- 14: Rastkugel
- 15: Stellring
- 16: Bohrung
- 17: Kugellager
- 18: Stopfen
- 19: Sicherungsring
- 20: Außensechskant
- 21: Innensechskant
- 22: Kugellager

- 30: Kugeltasche, Vertiefung
- 31: Erste Schaltnocke
- 32: Zweite Schaltnocke
- 33: Ausleitbahn
- 34: Freilaufbahn
- 35: Nockenbahn
- 36: Abzweigung/Mündung
- 37: Führung
- 40: Schiebering
- 41: Klaue
- 42: Öffnung für Sensor
- 43: Freilaufklinkenring
- 44: Freilaufklinke
- 45: Stirnseite des ersten Führungsrings
- 46: Freilaufzahn
- 47: Wellenfeder
- 48: Gehäusefester Ring
- 49: Zylindrischer Abschnitt
- 50: Aussparung
- 51: Führungsstift
- 52: Nut im Freilaufklinkenring
- 53: Nut im gehäusefesten Ring

## Patentansprüche

1. Drehmomentabhängig auslösbare Abschaltkupplung (1) für eine elektrische Handwerkzeugmaschine, insbesondere für einen Schrauber, zur selektiven Übertragung eines Drehmoments von einer Antriebswelle (2) auf eine zu der Antriebswelle (2) koaxiale Abtriebswelle (3),
mit einem Nockenring (7), welcher mit der Antriebswelle (2) oder mit der Abtriebswelle (3) drehfest verbindbar ist,
mit einem axial nicht verschiebbaren ersten Führungsring (8), welcher mit der anderen der Antriebswelle (2) und der Abtriebswelle (3) drehfest verbindbar ist,
wobei die Abschaltkupplung (2) von einer ersten Schaltstellung, in der der Nockenring (7) mit dem ersten Führungsring (8) in einer ersten Drehrichtung, insbesondere in axialer Richtung von der Antriebswelle (2) zur Abtriebswelle (3) hin gesehen im Uhrzeigersinn, drehmomentübertragend verbunden ist, in eine zweite Schaltstellung, in der der Nockenring (7) gegenüber dem ersten Führungsring (8) frei drehbar ist, bringbar ist,
mit wenigstens einem Schaltelement (11), insbesondere einer Kugel, welches von dem ersten Führungsring (8) in Umfangsrichtung und/oder in radialer Richtung geführt ist,
und mit einem zweiten Führungsring (9), wobei der Nockenring (7) und der zweite Führungsring (9) axial gegeneinander vorgespannt sind und das wenigstens eine Schaltelement (11) axial zwischen sich aufnehmen,
wobei der Nockenring (7) derart ausgebildet ist, dass, wenn sich die Abschaltkupplung (1) in der ersten Schaltstellung befindet, das wenigstens eine Schaltelement (11) bei Überschreitung eines in der ersten Drehrichtung wirkenden ersten Auslösedrehmoments relativ zu dem Nockenring (7) gegen die Wirkung der Vorspannung in axialer Richtung ausgelenkt wird, wodurch die Abschaltkupplung (1) in die zweite Schaltstellung gebracht wird.

2. Abschaltkupplung (1) gemäß Anspruch 1, **dadurch gekennzeichnet, dass** der Nockenring (7) aufweist:
- wenigstens eine Vertiefung (30), insbesondere eine Kugeltasche, in der das wenigstens eine Schaltelement (11) in der ersten Schaltstellung aufgenommen ist, wobei durch die wenigstens eine Vertiefung (30) eine erste Schaltnocke (31) gebildet ist, an der das wenigstens eine Schaltelement (11) in der ersten Schaltstellung anliegt,
- eine in Umfangsrichtung geschlossene Freilaufbahn (34), auf der das wenigstens eine Schaltelement (11) in der zweiten Schaltstellung umlaufen kann,
- und wenigstens eine Ausleitbahn (33), welche die wenigstens eine Vertiefung (30) und die Freilaufbahn (34) verbindet und auf welcher sich das wenigstens eine Schaltelement (11) von der wenigstens einen Vertiefung (30) zu der Freilaufbahn (34) und umgekehrt bewegen kann,
wobei das wenigstens eine Schaltelement (11) bei Überschreitung des ersten Auslösedrehmoments in axialer Richtung auslenkbar und die Abschaltkupplung (1) in die zweite Schaltstellung bringbar ist, indem sich das wenigstens eine Schaltelement (11) aus der wenigstens einen Vertiefung (30) über die wenigstens eine Ausleitbahn (33) in die Freilaufbahn (34) bewegt.

3. Abschaltkupplung (1) gemäß Anspruch 2, **dadurch gekennzeichnet, dass** das axiale Niveau der wenigstens einen Ausleitbahn (33) von der Vertiefung (30) in Richtung der Freilaufbahn (34) ansteigt und stets tiefer als oder gleich hoch wie das axiale Niveau der Freilaufbahn (34) ist.

4. Abschaltkupplung (1) gemäß einem der vorhergehenden Ansprüche, **dadurch gekennzeichnet, dass** der erste Führungsring (8) als Käfigring mit wenigstens einer Durchgangsöffnung (10) ausgebildet ist und das wenigstens eine Schaltelement (11) in der wenigstens einen Durchgangsöffnung (10) aufgenommen ist.

5. Abschaltkupplung (1) gemäß Anspruch 4, **dadurch gekennzeichnet, dass** die wenigstens eine Durchgangsöffnung (10) eine langgestreckte, insbesondere langgestreckte, gerade Form aufweist, deren Erstreckungsrichtung gegenüber einer radialen Richtung geneigt ist.

6. Abschaltkupplung (1) gemäß einem der Ansprüche 2 bis 5, **dadurch gekennzeichnet, dass** die wenigstens eine Vertiefung (30) innerhalb des Nockenrings (7) beabstandet zu dessen Außenumfang angeordnet ist.

7. Abschaltkupplung (1) gemäß einem der Ansprüche 2 bis 6, **dadurch gekennzeichnet, dass** die Freilaufbahn (34) ein konstantes axiales Niveau aufweist.

8. Abschaltkupplung (1) gemäß einem der Ansprüche 2 bis 7, **dadurch gekennzeichnet, dass** die wenigstens eine Ausleitbahn (33) wenigstens teilweise die Form einer logarithmischen Spirale aufweist.

9. Abschaltkupplung (1) gemäß einem der vorhergehenden Ansprüche,
**dadurch gekennzeichnet, dass**
die Abschaltkupplung (1) von einer dritten Schaltstellung, in der der Nockenring (7) mit dem ersten Führungsring (8) in einer zweiten, der ersten Drehrichtung entgegengesetzten Drehrichtung, insbesondere in axialer Richtung von der Antriebswelle (2) zur Abtriebswelle (3) hin gesehen gegen den Uhrzeigersinn, drehmomentübertragend verbunden ist, in eine vierte Schaltstellung, in der der Nockenring (7) gegenüber dem ersten Führungsring (8) frei drehbar ist, bringbar ist,
wobei der Nockenring (7) derart ausgebildet ist, dass, wenn sich die Abschaltkupplung (1) in der dritten Schaltstellung befindet, das wenigstens eine Schaltelement (11) bei Überschreitung eines in der zweiten Drehrichtung wirkenden zweiten Auslösedrehmoments relativ zu dem Nockenring (7) gegen die Wirkung der Vorspannung in axialer Richtung ausgelenkt wird, wodurch die Abschaltkupplung (1) in die vierte Schaltstellung gebracht wird.

10. Abschaltkupplung (1) gemäß Anspruch 2 und gemäß Anspruch 9, **dadurch gekennzeichnet, dass** das wenigstens eine Schaltelement (11) in der dritten Schaltstellung in der wenigstens einen Vertiefung (30) aufgenommen ist, wobei durch die wenigstens eine Vertiefung (30) eine zweite Schaltnocke (32) gebildet ist, an der das wenigstens eine Schaltelement (11) in der dritten Schaltstellung anliegt,
wobei der Nockenring (7) weiterhin eine in Umfangsrichtung weitgehend geschlossene und nur durch die wenigstens eine Vertiefung (30) unterbrochene Nockenbahn (35) aufweist, auf der das wenigstens eine Schaltelement (11) in der vierten Schaltstellung wenigstens abschnittsweise umlaufen kann,
wobei das wenigstens eine Schaltelement (11) bei Überschreitung des zweiten Auslösedrehmoments in axialer Richtung auslenkbar und die Abschaltkupplung (1) in die vierte Schaltstellung bringbar ist, indem sich das wenigstens eine Schaltelement (11) aus der wenigstens einen Vertiefung (30) in die Nockenbahn (35) bewegt.

11. Abschaltkupplung (1) gemäß einem der vorhergehenden Ansprüche,
**dadurch gekennzeichnet, dass** die Abschaltkupplung (1) einen Freilauf (43-46) aufweist, welcher geöffnet und geschlossen werden kann, welcher dazu eingerichtet ist, sich an einem Gehäuse der elektrischen Handwerkzeugmaschine abzustützen, und welcher im geschlossenen Zustand eine Drehung der Abtriebswelle (3) in der ersten Drehrichtung zulässt und eine Drehung der Abtriebswelle (3) in der zweiten Drehrichtung blockiert und im offenen Zustand die Drehbarkeit der Abtriebswelle (3) nicht beeinflusst.

12. Abschaltkupplung (1) gemäß Anspruch 11, **dadurch gekennzeichnet, dass** der Freilauf (43-46) ein Klinkenfreilauf ist, bei dem wenigstens eine Freilaufklinke (44) in wenigstens einen Freilaufzahn (46) eingreift, wobei die wenigstens eine Freilaufklinke (44) auf einem axial verschiebbaren, nicht drehbaren und gegen den wenigstens einen Freilaufzahn (46) axial vorgespannten Freilaufklinkenring (43) angeordnet ist und der wenigstens eine Freilaufzahn (46) an einer Stirnseite (45) des ersten Führungsrings (8) angeordnet ist.

13. Abschaltkupplung (1) gemäß Anspruch 12, **dadurch gekennzeichnet, dass** der Freilauf (43-46) durch eine axiale Verschiebung des Freilaufklinkenrings (43) geschlossen und geöffnet werden kann, welche durch eine axiale Verschiebung des zweiten Führungsrings (9) bewirkbar ist.

14. Abschaltkupplung (1) gemäß einem der Ansprüche 12 und 13, **dadurch gekennzeichnet, dass** der Nockenring (7) und der erste Führungsring (8) axial zwischen dem Freilaufklinkenring (43) und dem zweiten Führungsring (9) angeordnet sind und dass der zweite Führungsring (9) oder ein mit dem zweiten Führungsring (9) verbundenes und gegenüber diesem axial nicht verschiebbares Bauteil den Nockenring (7) und den ersten Führungsring (8) axial übergreift.

15. Elektrische Handwerkzeugmaschine, insbesondere Schrauber, mit einer Abschaltkupplung (1) gemäß einem der vorhergehenden Ansprüche.

## Claims

1. Torque-dependently releasable disconnect coupling (1) for an electric hand-held power tool, in particular for a screwdriver, to selectively transmit a torque from a drive shaft (2) to an output shaft (3) that is coaxial with respect to the drive shaft (2),
with a cam ring (7) that is rotatably fixedly connectable to the drive shaft (2) or to the output shaft (3);
with an axially non-displaceable first guide ring (8) that is rotatably fixedly connectable to the other of the drive shaft (2) and the output shaft (3);
wherein the disconnect coupling (2) can be brought from a first switching position, in which the cam ring (7) is connected in a torque-transmitting manner with the first guide ring (8) in a first rotational direction, in particular clockwise in the axial direction viewed from the drive shaft (2) toward the output shaft (3), into a second switching position in which the cam ring (7) is freely rotatable with respect to the first guide ring (8), and
with at least one switching element (11), in particular a ball, that is guided by the first guide ring (8) in the circumferential direction and/or in the radial direction
and with a second guide ring (9), the cam ring (7) and the second guide ring (9) being axially pretensioned against one another and accommodate the at least one switching element (11) axially between them,
wherein the cam ring (7) is designed such that when the disconnect coupling (1) is in the first switching position, the at least one switching element (11) is deflected relatively to the cam ring (7) against the action of the pretensioning in the axial direction, when a first release torque that acts in the first rotational direction is exceeded, whereby the disconnect coupling (1) is brought into the second switching position.

2. Disconnect coupling (1) according to claim 1, **characterized in that** the cam ring (7) comprises:
- at least one depression (30), in particular a ball pocket, in which the at least one switching element (11) is accommodated in the first switching position, wherein the at least one depression (30) forms a first switching cam (31) against which the at least one switching element (11) rests in the first switching position;
- a freewheeling track (34) closed in the circumferential direction, on which the at least one switching element (11) can orbit in the second switching position;
- and at least one discharge track (33) that connects the at least one depression (30) and the freewheeling track (34) and on which the at least one switching element (11) can move from the at least one depression (30) to the freewheeling track (34) and vice versa,
wherein, when the first release torque is exceeded, the at least one switching element (11) is deflectable in the axial direction and the disconnect coupling (1) can be brought into the second switching position by moving the at least one switching element (11) from the at least one depression (30) via the at least one discharge track (33) into the freewheeling track (34).

3. Disconnect coupling (1) according to claim 2, **characterized in that** the axial level of the at least one discharge track (33) rises from the depression (30) in the direction of the freewheeling track (34) and is always lower than or at the same height as the axial level of the freewheeling track (34).

4. Disconnect coupling (1) according to one of the preceding claims, **characterized in that** the first guide ring (8) is designed as a cage ring having at least one through opening (10), and the at least one switching element (11) is accommodated in the at least one through opening (10).

5. Disconnect coupling (1) according to claim 4, **characterized in that** the at least one through opening (10) has an elongated, in particular an elongated straight, shape, whose direction of extension is inclined with respect to a radial direction.

6. Disconnect coupling (1) according to one of claims 2 to 5, **characterized in that** the at least one depression (30) inside the cam ring (7) is arranged in a manner spaced apart from the outer circumference of the cam ring (7).

7. Disconnect coupling (1) according to one of claims 2 to 6, **characterized in that** the freewheeling track (34) has a constant axial level.

8. Disconnect coupling (1) according to one of claims 2 to 7, **characterized in that** the at least one discharge track (33) has, at least partially, the shape of a logarithmic spiral.

9. Disconnect coupling (1) according to one of the preceding claims,
**characterized in that**
the disconnect coupling (1) can be brought from a third switching position, in which the cam ring (7) is connected in a torque-transmitting manner with the first guide ring (8) in a second rotational direction opposite to the first rotational direction, in particular counterclockwise in the axial direction viewed from the drive shaft (2) toward the output shaft (3), into a fourth switching position in which the cam ring (7) is freely rotatable with respect to the first guide ring (8), and
wherein the cam ring (7) is designed such that when the disconnect coupling (1) is in the third switching position, the at least one switching element (11) is deflected relatively to the cam ring (7) against the action of the pretensioning in the axial direction, when a second release torque that acts in the second rotational direction is exceeded, whereby the disconnect coupling (1) is brought into the fourth switching position.

10. Disconnect coupling (1) according to claim 2 and according to claim 9,
**characterized in that** in the third switching position, the at least one switching element (11) is accommodated in the at least one depression (30), wherein the at least one depression (30) forms a second switching cam (32) against which the at least one switching element (11) rests in the third switching position,
wherein the cam ring (7) further has a cam track (35) that is largely closed in the circumferential direction and is interrupted only by the at least one depression (30), on which the at least one switching element (11) can at least sectionwise orbit in the fourth switching position,
wherein the at least one switching element (11) is deflectable in the axial direction when the second release torque is exceeded, and the disconnect coupling (1) can be brought into the fourth switching position by moving the at least one switching element (11) from the at least one depression (30) into the cam track (35).

11. Disconnect coupling (1) according to one of the preceding claims,
**characterized in that** the disconnect coupling (1) has a freewheel (43-46) that can be opened and closed, and which is configured to be supported at a housing of the electric hand-held power tool, and which in the closed state allows a rotation of the output shaft (3) in the first rotational direction and blocks a rotation of the output shaft (3) in the second rotational direction, and in the open state does not affect the rotatability of the output shaft (3).

12. Disconnect coupling (1) according to claim 11, **characterized in that** the freewheel (43-46) is a ratchet-type freewheel in which at least one freewheel ratchet (44) engages with at least one freewheel tooth (46), wherein the at least one freewheel ratchet (44) is arranged on an axially displaceable, non-rotatable freewheel ratchet ring (43) that is axially pretensioned against the at least one freewheel tooth (46), and the at least one freewheel tooth (46) is arranged at an end-face side (45) of the first guide ring (8).

13. Disconnect coupling (1) according to claim 12, **characterized in that** the freewheel (43-46) can be closed and opened by an axial displacement of the freewheel ratchet ring (43), which is achieved by an axial displacement of the second guide ring (9).

14. Disconnect coupling (1) according to one of claims 12 and 13,
**characterized in that** the cam ring (7) and the first guide ring (8) are arranged axially between the freewheel ratchet ring (43) and the second guide ring (9) and that the second guide ring (9) or a component that is connected to the second guide ring (9) and is axially non-displaceable with respect to the second guide ring (9) axially overlaps the cam ring (7) and the first guide ring (8).

15. Electric hand-held power tool, in particular a screwdriver, with a disconnect coupling (1) according to one of the preceding claims.

## Revendications

1. Embrayage de coupure (1) pouvant être déclenché en fonction d'un couple de rotation pour une machine d'outillage à main électrique, en particulier pour une visseuse, en vue d'une transmission sélective d'un couple de rotation depuis un arbre d'entraînement (2) vers un arbre de sortie (3) coaxial par rapport à l'arbre d'entraînement (2),
avec un anneau à came (7), lequel peut être relié de façon solidaire en rotation à l'arbre d'entraînement (2) ou avec l'arbre de sortie (3),
avec un premier anneau de guidage (8) qui ne peut pas être déplacé axialement, lequel peut être relié de façon solidaire en rotation à l'autre parmi l'arbre d'entraînement (2) et l'arbre de sortie (3),
dans lequel l'embrayage de coupure (1) peut être amené depuis une première position de commutation dans laquelle l'anneau à came (7) est relié au premier anneau de guidage (8) de façon à transmettre le couple de rotation dans une première direction de rotation, en particulier dans le sens des aiguilles d'une montre vu dans la direction axiale allant de l'arbre d'entraînement (2) vers l'arbre de sortie (3), jusque dans une deuxième position de commutation dans laquelle l'anneau à came (7) peut être tourné librement par rapport au premier anneau de guidage (8),
avec au moins un élément de commutation (11), en particulier une bille, laquelle est guidée depuis le premier anneau de guidage (8) dans la direction périphérique et/ou dans la direction radiale,
et avec un second anneau de guidage (9), dans lequel l'anneau à came (7) et le second anneau de guidage (9) sont axialement précontraints l'un par rapport à l'autre et reçoivent axialement entre eux le au moins un élément de commutation (11),
dans lequel l'anneau à came (7) est conçu de sorte que, lorsque l'embrayage de coupure (1) se trouve dans la première position de commutation, le au moins un élément de commutation (11) est, en cas de dépassement d'un premier couple de rotation de déclenchement agissant dans la première direction de rotation relativement à l'anneau à came (7), dévié dans la direction axiale à l'encontre de l'action de la précontrainte, moyennant quoi l'embrayage de coupure (1) est amené dans la deuxième position de commutation.

2. Embrayage de coupure (1) selon la revendication 1, **caractérisé en ce que** l'anneau à came (7) comprend :
- au moins un renfoncement (30), en particulier une poche à bille dans laquelle le au moins un élément de commutation (11) est reçu dans la première position de commutation, dans lequel grâce à le au moins un renfoncement (30) est formée une première came de commutation (31) contre laquelle le au moins un élément de commutation (11) repose dans la première position de commutation,
- une piste de roue libre (34) fermée dans la direction périphérique, sur laquelle le au moins un élément de commutation (11) peut circuler dans la deuxième position de commutation,
- et au moins une piste d'évacuation (33), laquelle relie le au moins un renfoncement (30) et la piste de roue libre (34) et sur laquelle le au moins un élément de commutation (11) peut se déplacer depuis le au moins un renfoncement (30) vers la piste de roue libre (34) et inversement,
dans lequel, en cas de dépassement du premier couple de rotation de déclenchement, le au moins un élément de commutation (11) peut être dévié dans la direction axiale et l'embrayage de coupure (1) peut être amené dans la deuxième position de commutation, **en ce que** le au moins un élément de commutation (11) se déplace hors du au moins un renfoncement (30) via la au moins une piste d'évacuation (33) jusque dans la piste de roue libre (34).

3. Embrayage de coupure (1) selon la revendication 2, **caractérisé en ce que** le niveau axial de la au moins une piste d'évacuation (33) augmente depuis le renfoncement (30) dans la direction de la piste de roue libre (34) et est toujours plus profond ou aussi haut que le niveau axial de la piste de roue libre (34).

4. Embrayage de coupure (1) selon l'une des revendications précédentes, **caractérisé en ce que** le premier anneau de guidage (8) est conçu en tant qu'anneau de cage avec au moins une ouverture de passage (10) et le au moins un élément de commutation (11) est reçu dans la au moins une ouverture de passage (10).

5. Embrayage de coupure (1) selon la revendication 4, **caractérisé en ce que** la au moins une ouverture de passage (10) présente une forme allongée, en particulier une forme allongée droite, dont la direction d'extension est inclinée par rapport à une direction radiale.

6. Embrayage de coupure (1) selon l'une des revendications 2 à 5, **caractérisé en ce que** le au moins un renfoncement (30) est agencé à l'intérieur de l'anneau à came (7), à distance de la périphérie extérieure de celui-ci.

7. Embrayage de coupure (1) selon l'une des revendications 2 à 6, **caractérisé en ce que** la piste de roue libre (34) présente un niveau axial constant.

8. Embrayage de coupure (1) selon l'une des revendications 2 à 7, **caractérisé en ce que** la au moins une piste d'évacuation (33) présente au moins partiellement la forme d'un spirale logarithmique.

9. Embrayage de coupure (1) selon l'une des revendications précédentes, **caractérisé en ce que**
l'embrayage de coupure (1) peut être amené depuis une troisième position de commutation dans laquelle l'anneau à came (7) est relié au premier anneau de guidage (8) de façon à transmettre le couple de rotation dans une seconde direction de rotation, opposée à la première direction de rotation, en particulier à l'encontre du sens des aiguilles d'une montre vu dans la direction axiale allant de l'arbre d'entraînement (2) vers l'arbre de sortie (3), jusque dans une quatrième position de commutation dans laquelle l'anneau à came (7) peut être tourné librement par rapport au premier anneau de guidage (8),
dans lequel l'anneau à came (7) est conçu de sorte que, lorsque l'embrayage de coupure (1) se trouve dans la troisième position de commutation, le au moins un élément de commutation (11) est, en cas de dépassement d'un second couple de rotation de déclenchement agissant dans la seconde direction de rotation relativement à l'anneau à came (7), dévié dans la direction axiale à l'encontre de l'action de la précontrainte, moyennant quoi l'embrayage de coupure (1) est amené dans la quatrième position de commutation.

10. Embrayage de coupure (1) selon la revendication 2 et selon la revendication 9, **caractérisé en ce que** dans la troisième position de commutation le au moins un élément de commutation (11) est reçu dans le au moins un renfoncement (30), dans lequel grâce à le au moins un renfoncement (30) est formée une seconde came de commutation (32) contre laquelle le au moins un élément de commutation (11) repose dans la troisième position de commutation,
dans lequel l'anneau à came (7) comprend en outre une piste de came (35) en grande partie fermée dans la direction périphérique et uniquement interrompue par le au moins un renfoncement (30), sur laquelle le au moins un élément de commutation (11) peut circuler au moins par endroits dans la quatrième position de commutation,
dans lequel, en cas de dépassement du second couple de rotation de déclenchement, le au moins un élément de commutation (11) peut être dévié dans la direction axiale et l'embrayage de coupure (1) peut être amené dans la quatrième position de commutation, **en ce que** le au moins un élément de commutation (11) se déplace hors du au moins un renfoncement (30) jusque dans la piste de came (35).

11. Embrayage de coupure (1) selon l'une des revendications précédentes, **caractérisé en ce que** l'embrayage de coupure (1) comprend une roue libre (43-46), que l'on peut ouvrir et fermer, laquelle est configurée pour s'appuyer contre un logement de la machine d'outillage à main électrique, et laquelle à l'état fermé autorise une rotation de l'arbre de sortie (3) dans la première direction de rotation et bloque une rotation de l'arbre de sortie (3) dans la seconde direction de rotation, et à l'état ouvert n'influe pas sur la capacité de rotation de l'arbre de sortie (3).

12. Embrayage de coupure (1) selon la revendication 11, **caractérisé en ce que** la roue libre (43-46) est une roue libre à cliquets où au moins un cliquet de roue libre (44) s'engage dans au moins une dent de roue libre (46), dans lequel le au moins un cliquet de roue libre (44) est agencé sur un anneau de cliquet de roue libre (43) qui peut être déplacé axialement, ne peut pas être tourné et est précontraint axialement à l'encontre de la au moins une dent de roue libre (46), et la au moins une dent de roue libre (46) est agencée contre un côté frontal (45) du premier anneau de guidage (8).

13. Embrayage de coupure (1) selon la revendication 12, **caractérisé en ce que** la roue libre (43-46) peut être ouverte et fermée grâce à un déplacement axial de l'anneau de cliquet de roue libre (43), lequel déplacement peut être provoqué par un déplacement axial du second anneau de guidage (9).

14. Embrayage de coupure (1) selon l'une des revendications 12 et 13, **caractérisé en ce que** l'anneau à came (7) et le premier anneau de guidage (8) sont agencés axialement entre l'anneau de cliquet de roue libre (43) et le second anneau de guidage (9) et **en ce que** le second anneau de guidage (9) ou un composant relié au second anneau de guidage (9) et qui ne peut pas être déplacé axialement par rapport à celui-ci recouvre l'anneau à came (7) et le premier anneau de guidage (8).

15. Machine d'outillage à main électrique, en particulier visseuse, avec un embrayage de coupure (1) selon l'une des revendications précédentes.
